(19)

**Europäisches Patentamt**
**European Patent Office**
**Office européen des brevets**

(11) **EP 4 730 733 A1**

(12) **EUROPEAN PATENT APPLICATION**

(43) Date of publication:
22.04.2026 Bulletin 2026/17

(21) Application number: 25208682.2

(22) Date of filing: 14.10.2025

(51) International Patent Classification (IPC):
H04L 41/0663 (2022.01)  H04L 43/0811 (2022.01)
H04L 43/106 (2022.01)  H04L 12/28 (2006.01)
H04L 43/0852 (2022.01)  H04L 41/045 (2022.01)

(52) Cooperative Patent Classification (CPC):
H04L 43/106; H04L 41/0663; H04L 43/0811;
H04L 41/045; H04L 43/0852

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 16.10.2024 CN 202411452032

(71) Applicant: Nokia Solutions and Networks Oy
02610 Espoo (FI)

(72) Inventor: MA, Xiao Hua
Shanghai, 201206 (CN)

(74) Representative: DREISS Patentanwälte PartG
mbB
Friedrichstraße 6
70174 Stuttgart (DE)

(54) **DEVICE, METHOD, APPARATUS AND COMPUTER-READABLE MEDIUM FOR ETHERNET COMMUNICATION**

(57) Embodiments of the present disclosure relate to a method, an apparatus and a computer readable medium for automatically measuring a service interruption time of a point-to-point or multipoint Ethernet service during path switchover. In the method, the first apparatus detects, based on a continuity check message (CCM) set, at least one loss of continuity defect (dLOC) associated with a service interruption of an Ethernet service, and then determine a first timestamp indicating a raise time of a first dLOC among the at least one dLOC, and a second timestamp indicating a clear time of a last dLOC among the at least one dLOC. Then, the first apparatus sends the first timestamp and the second timestamp to a second apparatus. A second apparatus determines a service interruption time of a multipoint Ethernet service based on at least one first timestamp and at least one second timestamp received from a plurality of first apparatuses. Alternatively, an apparatus detects a loss of continuity defect (dLOC) or a remote defect indication defect (dRDI) based on a CCM set, and determines a first timestamp indicating a start of a service interruption, and a second timestamp indicating an end of the service interruption, to determine a service interruption time of a multi-point Ethernet service.

FIG. 2

**Description**

**TECHNICAL FIELD**

Various example embodiments relate to the field of Ethernet communications, and more specifically, to a device, a method, an apparatus, and a computer-readable media for automatically measuring a service interruption time of a point-to-point or multipoint Ethernet service during path switchover.

**BACKGROUND**

The Ethernet can be regarded as facilities that enable communication between two or more communication devices or provide communication devices with access to data networks. An Ethernet switch provides an end-to-end carrier ethernet services as defined by the Metro Ethernet Forum (MEF), to carry user data flows called "service frames".
On the network side, an Ethernet protection mechanism (such as ITU-T G.8032 Ethernet Ring Protection (ERP), ITU-T G.8031 Ethernet Linear Protection (ELP), or the like) is used to provide redundancy between customer equipment, so that a user data flow can be switched from a working path to a protection path.

**SUMMARY**

In general, example embodiments of the present disclosure provide device, a method, an apparatus, and a computer-readable media for automatically measuring a service interruption time of a point-to-point or multipoint Ethernet service during path switchover.
In a first aspect, there is provided a first apparatus. The first apparatus comprises at least one processor and at least one memory storing instructions that, when executed by the at least one processor, cause the first apparatus at least to: detect, based on a continuity check message (CCM) set, at least one loss of continuity defect (dLOC) associated with a service interruption of an Ethernet service; determine a first timestamp indicating a raise time of a first dLOC among the at least one dLOC; determine a second timestamp indicating a clear time of a last dLOC among the at least one dLOC; and send the first timestamp and the second timestamp to a second apparatus.
In a second aspect, there is provided a second apparatus. The second apparatus comprises at least one processor and at least one memory storing instructions that, when executed by the at least one processor, cause the second apparatus at least to: receive at least one first timestamp and at least one second timestamp from at least one first apparatus, wherein a first timestamp of a first apparatus among the at least one first apparatus indicates a raise time of a first loss of continuity defect (dLOC), at the first apparatus, among at least one dLOC associated with a service interruption of an Ethernet service, and a second timestamp of the first apparatus indicates a clear time of a last dLOC among the at least one dLOC; and determine a service interruption time of the Ethernet service based on the at least one first timestamp and the at least one second timestamp.
In a third aspect, there is provided an apparatus. The apparatus comprises at least one processor and at least one memory storing instructions that, when executed by the at least one processor, cause the apparatus at least to: detect, based on a continuity check message (CCM) set, at least one defect associated with a service interruption of an Ethernet service; determine a first timestamp indicating a raise time of a first defect among the at least one defect; determine a second timestamp indicating a clear time of a last defect among the at least one defect; and determine a service interruption time of the Ethernet service based on the first timestamp and the second timestamp.
In a fourth aspect, there is provided a method. The method comprises: detecting, at a first apparatus, at least one loss of continuity defect (dLOC) associated with a service interruption of an Ethernet service based on a continuity check message (CCM) set; determining a first timestamp indicating a raise time of a first dLOC among the at least one dLOC; determining a second timestamp indicating a clear time of a last dLOC among the at least one dLOC; and sending the first timestamp and the second timestamp to a second apparatus.
In a fifth aspect, there is provided a method. The method comprises: receiving, at a second apparatus, at least one first timestamp and at least one second timestamp from at least one first apparatus, wherein a first timestamp of a first apparatus among the at least one first apparatus indicates a raise time of a first loss of continuity defect (dLOC), at the first apparatus, among at least one dLOC associated with a service interruption of an Ethernet service, and a second timestamp of the first apparatus indicates a clear time of a last dLOC among the at least one dLOC; and determining a service interruption time of the Ethernet service based on the at least one first timestamp and the at least one second timestamp.
In a sixth aspect, there is provided a method. The method comprises: detecting, based on a continuity check message (CCM) set, at least one defect associated with a service interruption of an Ethernet service; determining a first timestamp indicating a raise time of a first defect among the at least one defect; determining a second timestamp indicating a clear time of a last defect among the at least one defect; and determining a service interruption time of the Ethernet service based on the first timestamp and the second timestamp.

In a seventh aspect, there is provided a first apparatus. The first apparatus comprises: means for detecting, based on a continuity check message (CCM) set, at least one loss of continuity defect (dLOC) associated with a service interruption of an Ethernet service; means for determining a first timestamp indicating a raise time of a first dLOC among the at least one dLOC; means for determining a second timestamp indicating a clear time of a last dLOC among the at least one dLOC; and means for sending the first timestamp and the second timestamp to a second apparatus.

In an eighth aspect, there is provided a second apparatus. The second apparatus comprises: means for receiving at least one first timestamp and at least one second timestamp from at least one first apparatus, wherein a first timestamp of a first apparatus among the at least one first apparatus indicates a raise time of a first loss of continuity defect (dLOC), at the first apparatus, among at least one dLOC associated with a service interruption of an Ethernet service, and a second timestamp of the first apparatus indicates a clear time of a last dLOC among the at least one dLOC; and means for determining a service interruption time of the Ethernet service based on the at least one first timestamp and the at least one second timestamp.

In a ninth aspect, there is provided an apparatus. The apparatus comprises: means for detecting, based on a continuity check message (CCM) set, at least one defect associated with a service interruption of an Ethernet service; means for determining a first timestamp indicating a raise time of a first defect among the at least one defect; means for determining a second timestamp indicating a clear time of a last defect among the at least one defect; and means for determining a service interruption time of the Ethernet service based on the first timestamp and the second timestamp.

In a tenth aspect, there is provided a computer readable medium. The computer readable medium comprises program instructions stored thereon, where the program instructions can be used to perform at least the methods according to the fourth, fifth and sixth aspects.

In an eleventh aspect, there is provided a computer program comprising instructions. The instructions, when executed by an apparatus, cause the apparatus to perform at least the methods according to the fourth, fifth and sixth aspects.

In a twelfth aspect, there is provided a first apparatus. The first apparatus comprises: a detecting circuitry configured to detect, based on a continuity check message (CCM) set, at least one loss of continuity defect (dLOC) associated with a service interruption of an Ethernet service; a first determining circuitry configured to determine a first timestamp indicating a raise time of a first dLOC among the at least one dLOC; a second determining circuitry configured to determine a second timestamp indicating a clear time of a last dLOC among the at least one dLOC; and a sending circuitry configured to send the first timestamp and the second timestamp to a second apparatus.

In a thirteenth aspect, there is provided a second apparatus. The second apparatus comprises: a receiving circuitry configured to receive at least one first timestamp and at least one second timestamp from at least one first apparatus, wherein a first timestamp of a first apparatus among the at least one first apparatus indicates a raise time of a first loss of continuity defect (dLOC), at the first apparatus, among at least one dLOC associated with a service interruption of an Ethernet service, and a second timestamp of the first apparatus indicates a clear time of a last dLOC among the at least one dLOC; and a determining circuitry configured to determine a service interruption time of the Ethernet service based on the at least one first timestamp and the at least one second timestamp.

In a fourteenth aspect, there is provided an apparatus. The apparatus comprises: a detecting circuitry configured to detect, based on a continuity check message (CCM) set, at least one defect associated with a service interruption of an Ethernet service; a first determining circuitry configured to determine a first timestamp indicating a raise time of a first defect among the at least one defect; a second determining circuitry configured to determine a second timestamp indicating a clear time of a last defect among the at least one defect; and a third determining circuitry configured to determine a service interruption time of the Ethernet service based on the first timestamp and the second timestamp.

It is to be understood that the summary section is not intended to identify key or essential features of the embodiments of the present disclosure, nor is it intended to be used to limit the scope of the present disclosure. Other features of the present disclosure will become evident through the following description.

## BRIEF DESCRIPTION OF THE DRAWINGS

Some example embodiments will now be described with reference to the accompanying drawings, in which:

Fig. 1A illustrates an example Ethernet communication system in which example embodiments of the present disclosure can be implemented;

Fig. 1B illustrates a user data stream between customer equipment during Ethernet protection switching;

Fig. 1C illustrates a test setup of a traditional out-of-service test method using an external tester to measure a traffic hit time during protection switching;

Fig. 1D illustrates a working principle of the traditional out-of-service test method for calculating the traffic hit time;

Fig. 1E illustrates representations of different time periods from an occurrence of network impairment to a time that protected traffic is fully restored according to ITU-T G.808.1;

Fig. 2 illustrates a flowchart of a communication process according to example embodiments of the present disclosure;

Figs. 3A to 3B illustrate a schematic diagram of performing dLOC detection for an E-Line, an E-LAN, and an E-tree service when protection switching occurs according to example embodiments of the present disclosure, respectively;

Fig. 4 illustrates a schematic diagram of a mechanism for determining $T_{raise}$ and $T_{clear}$ for a specific dLOC;

Fig. 5 illustrates a flowchart of another communication process according to example embodiments of the present disclosure;

Figs. 6A to 6B illustrate a schematic diagram of performing dLOC or dRDI detection for an E-Line, an E-LAN, and an E-tree service when protection switching occurs according to example embodiments of the present disclosure, respectively;

Fig. 7 illustrates a schematic diagram of a mechanism for determining $T_{raise}$ and $T_{clear}$ for a specific dLOC or dRDI;

Fig. 8 illustrates a flowchart of an example method implemented at a first apparatus according to example embodiments of the present disclosure;

Fig. 9 illustrates a flowchart of an example method implemented at a second apparatus according to example embodiments of the present disclosure;

Fig. 10 illustrates a simplified block diagram of an apparatus adapted to implement example embodiments of the present disclosure; and

Fig. 11 illustrates an example block diagram of a computer readable medium according to example embodiments of the present disclosure.

Throughout the drawings, the same or similar reference symbols refer to the same or similar components.

## DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. The disclosure described herein can be implemented in various manners other than the ones described below.

In the following description and claims, unless defined otherwise, all technical and scientific terms used herein have the same meaning as commonly understood by one of the ordinary skilled in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of those skilled in the art to affect such feature, structure, or characteristic in connection with other embodiments whether or not explicitly described.

It should be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/or combinations thereof. As used herein, "at least one of the following: a list including two or more elements", "at least one in a list including two or more elements" and similar expressions (wherein the list including two or more elements is linked by "and" or "or") indicate at least any one element in the elements, or at least any two elements in the elements or at least a plurality of elements in the elements, or at least all of the elements.

As used in this application, the term "circuitry" may refer to one or more or all of the following:

(a) hardware-only circuit implementations (such as implementations in analog and/or digital circuitry only) and

(b) combinations of hardware circuits and software, such as (as applicable):

(i) a combination of analog and/or digital hardware circuit(s) with software/firmware and

(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of a hardware circuit or processor(s) alone or a portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network devices.

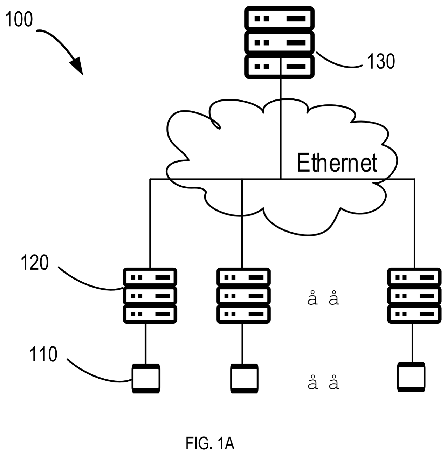

Fig. 1A illustrates an example Ethernet communication system 100 in which embodiments of the present disclosure can be implemented. As shown in Fig. 1A, the Ethernet communication system 100, as part of an Ethernet network, includes one or more customer equipment (CE) 110, one or more apparatuses 120 (e.g., Ethernet ETH switches), and an apparatus 130 (e.g., a network management system (NMS), or other network elements). It is noted that some embodiments of the present disclosure may only involve the apparatus 120, without the apparatus 130.

It would be appreciated that the Ethernet communication system 100 in Fig. 1A may include any appropriate number of devices suitable for implementing the embodiments of the present disclosure, and the number, the connection relationships and the types of devices or apparatuses as shown therein are provided only for illustration, without implying any limitation.

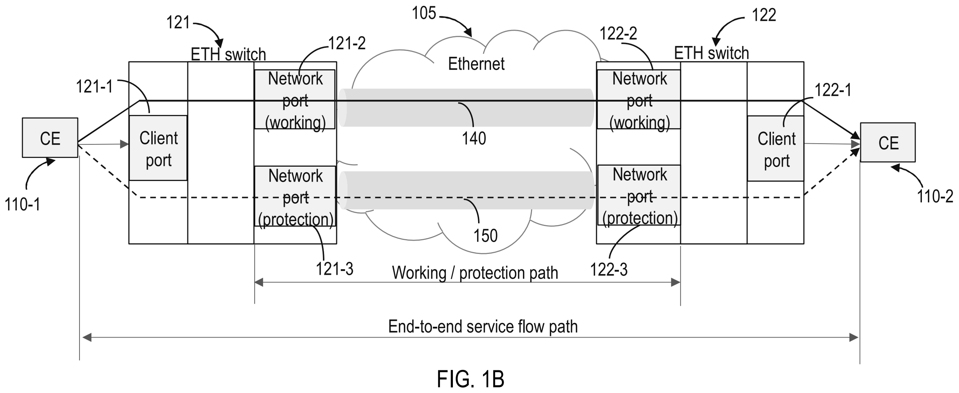

Fig. 1B illustrates a schematic diagram 101 of a user data flow between customer equipment during Ethernet protection switching. The network elements involved in Fig. 1B include a customer equipment (CE) 110 (e.g., a CE 110-1, and a CE 110-2), and an Ethernet ETH device 120 (e.g., an ETH switch 121, and an ETH switch 122) in Fig. 1A. As shown in Fig. 1B, before/after Ethernet protection switching, there are two user data flow paths between the CE 110-1 and the CE 110-2 as observed from the UNI of the device: an end-to-end service flow working path 140 through a client port 121-1 of the ETH switch 121, a network port 121-2, an Ethernet network 105, a network port 122-2 of the ETH switch 122, and a client port 122-1; and an end-to-end service flow protection path 150 through the client port 121-1 of the ETH switch 121, the network port 121-3, the Ethernet network 105, the network port 122-3 of the ETH switch 122, and the client port 122-1. The ETH switch 121 and the ETH switch 122 provide the end-to-end carrier Ethernet service as defined by the metro Ethernet forum (MEF), carry the user data flows called "service frames," and provide high redundancy by using Ethernet protection mechanism such as ITU-T G.8032 Ethernet ring protection (EPR), ITU-T G.8031 Ethernet linear protection, or the like, on the network side, so that the user data flows can be switched from the working path to the protection path, or vice versa.

For the purpose of brevity, Fig. 1A only shows a unidirectional service flow from the CE 110-1 to the CE 110-2; however, it would be appreciated that a service flow in an opposite direction may also work.

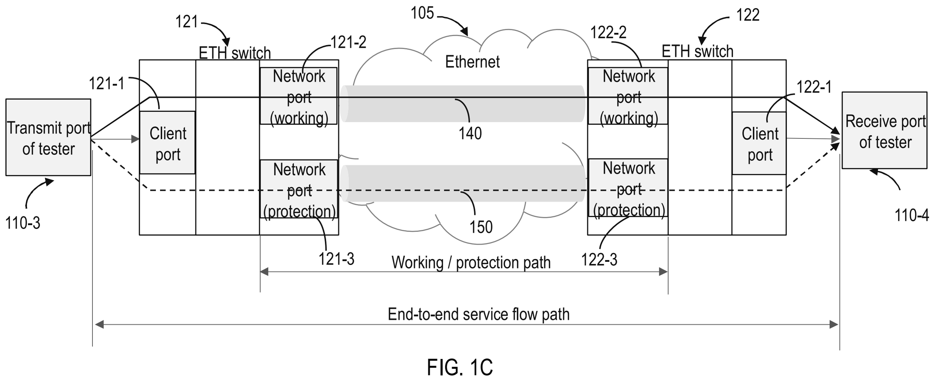

An optical or packet transport system generally implements the protection mechanism to protect networking entities such as ports, optical channel data unit (ODUK) containers (in a case of an optical transport network (OTN), Ethernet services/virtual local area networks (VLANs) (in a case of an Ethernet), or label switched paths (LSPs) or pseudowires (PWs) (in a case of multi-protocol label switching (MPLS)). An offline method is typically adopted to measure a service interruption time (also referred to as traffic hit time) during Ethernet protection switching, where measurement is performed using a tester, as shown in Fig. 1C.

Fig. 1C illustrates an example test setup 101' of a traditional out-of-service test method using an external tester to measure a traffic hit time during protection switching. In Fig. 1C, the transmit port 110-3 and the receive port 110-4 of the tester are respectively connected to a transmit port and a receive port of a Device Under Test (DUT) (i.e., the client port 121-1 of the ETH switch 121, and the client port 122-1 of the ETH switch 122), and the tester generates a flow of frames with a constant size and a constant period and then measures a number of frames lost during the switching operation. In some embodiments, the frame period may be, for example, 100 $\mu$s.

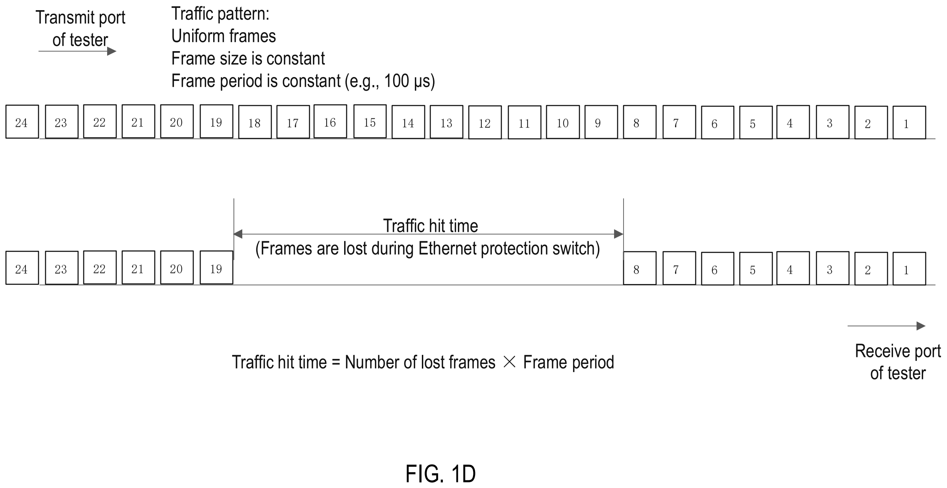

Fig. 1D illustrates a working principle of the traditional out-of-service test method for calculating the traffic hit time. As shown Fig. 1D, the traffic hit time can be derived based on the number of lost frames and the frame period, using the following calculation equation:

$$\text{traffic hit time} = \text{number of lost frames} \times \text{frame period}$$

It would be noted that the method is offline and intrusive to the network service of the device under test (since it replaces the user traffic by a tester) and typically only in a lab environment.

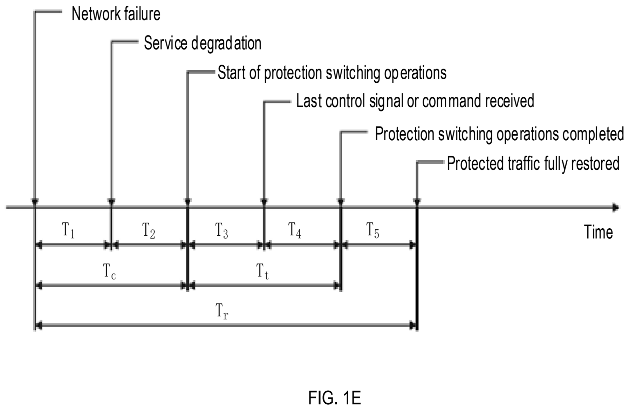

Fig. 1E illustrates representations of different time periods from an occurrence of network impairment to a time that protected traffic is fully restored according to ITU-T G.808.1. As shown in Fig. 1E, the protected traffic restoration time ($T_r$) typically consists of five parts, namely: $T_1$, a time from a network failure occurrence to a network service degradation occurrence; $T_2$, a time from the network service degradation occurrence to a start of a protection switching operation of the network; $T_3$, a time from the start of the protection switching operation of the network to reception of a last control signal or command; $T_4$, a time from the reception of the last control signal or command to completion of a protection switching operation; and $T_5$, a time from the protection switching operation to full restoration of the protected traffic. Wherein, both ITU-T G.8031 ELP and ITU-T G.8032 ERP require the transfer time (Tt, i.e., $T_3$+ $T_4$) should be less than 50 ms, but the service providers care most about the protected traffic restoration time (Tr), which is the traffic hit time experienced by the user traffic. Therefore, it is the traffic hit time corresponding to $T_r$ that is expected to be measured. From the above description, it could be learned that the calculation equation for the traffic hit time is:

$$T_r = T_1 + T_2 + T_3 + T_4 + T_5 = T_c + T_t + T_5$$

To be noted, in some cases, the device may detect an obvious network failure, but the failure was not acknowledged since it lasts a too short period. At this time, the traffic hit time is only related to $T_1$ and $T_2$.

Currently, the traditional measurement method, in which it is expected to measure the traffic hit time when users are connected in real time during network deployment, has the problem that the method involves active testing (which generates interference) and require service interruption; however, there is a need for an in-service method to measure the hit time (or interruption time) of the user flow during protection switching, i.e., a method that can be used while the service is up and running. For example, it is required that a network unit (NE) itself implement the traditional measurements performed by an external tester, calculate the switching time and report the same, which allows the network service providers to verify conformance to the service level specification (SLS).

In some solutions, it is proposed to use the in-service ITU-T Y.1731/G.8013 Ethernet OAM tool to measure a hit time experienced by OAM frames during Ethernet protection switching, to approximate to that of the user traffic monitored by the OAM frames, and the OAM frames and the user traffic are fate-sharing since they follow the same data path and undergo the same QoS processing. The basic principle is that: the ETH OAM tool on up maintenance end point (up MEP) at user network interfaces (UNIs) is enabled to monitor the user data flow in one direction or two directions between a pair of UNIs; the ETH OAM tool can continuously send OAM frames with a constant size and a constant interval; and when protection switching (from the working path to the protection path, or vice versa) occurs, the start time and the stop time of the traffic hit are derived based on the information of sequence numbers and/or timestamps in the received ETH OAM frames, and the traffic hit time is calculated accordingly.

However, such solution has not solved the following problems. First of all, the solution is mainly used to measure a traffic hit time of a data flow between a pair of UNIs for a point-to-point or multipoint service, not a traffic hit time of a multipoint service as a whole.

Second, the solution relies on ETH OAM frames with sequence numbers and timestamps. In order to achieve a millisecond level accuracy, these ETH OAM frames need to be sent sufficiently fast, i.e., an interval between the OAM frames should be at the millisecond level. In some cases, the network devices may not support such type of ETH OAM frames with sequence numbers and/or timestamps, or cannot support a high rate of the ETH OAM frames of that type. However, an ETH OAM CCM tool at 3.33ms is a mandatorily supported tool to monitor the connectivity of a service (if the ETH-OAM is supported, the CCM tool is definitely supported).

Considering the above analysis and discussion, the following mechanism is introduced by some embodiments of the present disclosure, namely: a network element (NE) and even a network management system (NMS) are used to automatically measure a traffic hit time of a point-to-point or multipoint Ethernet service during Ethernet protection switching (e.g., Ethernet Ring Protection, Ethernet Linear Protection, or the like).

With the above mechanism, it can be accomplished to perform an in-service measurement for a traffic hit time, without the need to stop the user traffic and use an external tester to measure a hit time of a test traffic generated by a tester.

The basic principle of the embodiments of the present disclosure includes: a basic ETH-OAM CCM tool on an Up MEP of each user network interface (UNI) of an Ethernet service (e.g., E-Line, E-LAN, E-tree, or E-access) is enabled to monitor a user data flow in the receiving direction; the CCM tool can continuously send CCM frames according to a constant size and a constant interval; and when protection switching (from the working path to the protection path, or vice versa) occurs, each UNI labels a timestamp of detection/clearance of a defect on its Up MEP; and all these timestamps are synthesized to determine a traffic hit time of an Ethernet service. Specifically, the embodiments of the present disclosure provide two implementations for measuring an interruption time of an Ethernet service.

In an implementation of the present disclosure, only timestamps of raising and clearing of a loss of continuity defect (dLOC) are to be recorded.

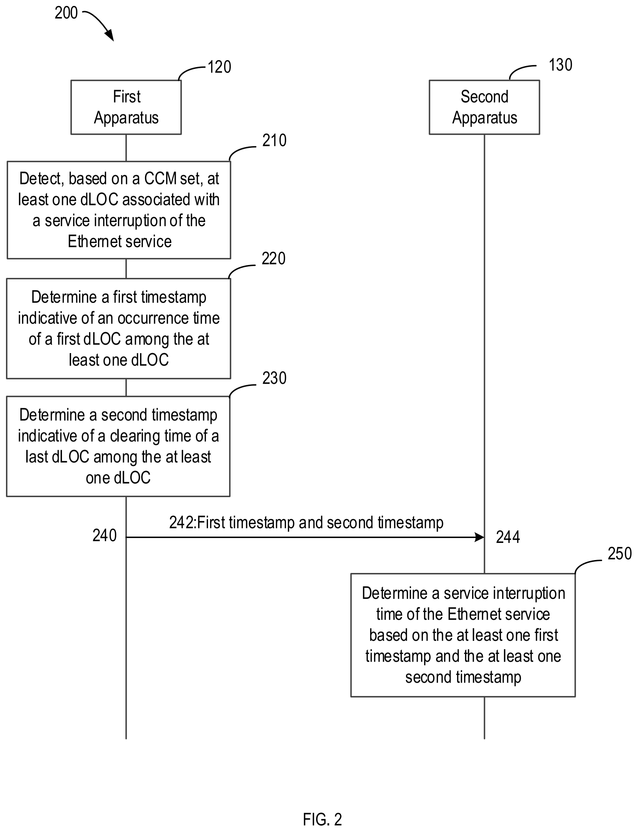

Fig. 2 illustrates a flowchart of a communication process 200 according to example embodiments of the present disclosure. For the purpose of discussion, reference will be made to Fig. 1A to describe the communication process 200.

The communication process 200 may involve interaction between the apparatus 120 (also referred to as first apparatus in Fig. 2) and the apparatus 130 (also referred to as second apparatus in Fig. 2).

As shown in Fig. 2, at 210, the first apparatus 120 detects, based on a continuity check message (CCM) set, at least one loss of continuity defect (dLOC) associated with a service interruption of the Ethernet service. In some embodiments, the Ethernet service herein may include an Ethernet line (E-line) service, an Ethernet local area network (E-LAN) service, an Ethernet tree (E-tree) service, an Ethernet access (E-access) service, or the like. In the embodiments, the service interruption herein may be caused by the Ethernet protection mechanism of the Ethernet service.

At 220, the first apparatus 120 determines a first timestamp. In the embodiment, the first timestamp indicates a raise time of a first dLOC among the at least one dLOC. In some embodiments, the occurrence of the dLOC can be detected if 3 continuous CCM frames are not received.

At 230, the first apparatus 120 determines a second timestamp. In the embodiment, the second timestamp indicates a clear time of the last dLOC among the at least one dLOC. In general, the first apparatus 120 can determine the second timestamp in various appropriate manners. For example, in some embodiments, based on detecting clearance of a dLOC among the at least one dLOC, the first apparatus 120 can record the clear time of the dLOC as a candidate second timestamp. The first apparatus 120 can start a timer corresponding to a predetermined time window. In addition, based on determining that no occurrence of a dLOC is detected in the predetermined time window, the first apparatus determines the candidate second timestamp as the second time stamp.

In some embodiments, based on determining that occurrence of a dLOC is detected in a predetermined time window, the first apparatus 120 can clear the candidate second timestamp. Then, the first apparatus 120 can reset the timer. In some embodiments, a length of the predetermined time window can be determined based on an expected duration of the service interruption.

In some embodiments, the first apparatus 120 may determine a third timestamp indicating a state change time of the Ethernet protection mechanism. Based on the third timestamp, the first apparatus 120 may determine validity of the first timestamp and the second timestamp.

In some embodiments, if the third timestamp is greater than the first timestamp and less than or equal to the second timestamp (i.e. Ethernet protection switching occurs between the first timestamp and the second timestamp), the first timestamp and the second timestamp can be determined to be valid.

In some embodiments, the first apparatus 120 can determine the service interruption time of the Ethernet service based on the first timestamp and the second timestamp. In particular, the service interruption time can be obtained by adding a time for detecting occurrence of a dLOC to a result of subtracting the first timestamp from the second timestamp. In some embodiments, the time for detecting occurrence of the dLOC may be 10 ms.

In some embodiments, when the at least one dLOC is at least one dLOC for a separate remote first apparatus 120, and the granularity of the service interruption time is per user data flow associated with the Ethernet service.

Alternatively, in some embodiments, when the at least one dLOC is at least one synthetic dLOC for a plurality of remote first apparatuses 120, the granularity of the service interruption time is per user network interface (UNI) associated with the Ethernet service.

At 244, the second apparatus 130 receives 242 at least one first timestamp and at least one second timestamp from the at least one first apparatus 120. At 250, the second apparatus 130 determines the service interruption time of the Ethernet service based on the at least one first timestamp and the at least one second timestamp received at 244.

In general, the second apparatus 130 can determine the service interruption time in various manners. For example, in some embodiments, the second apparatus 130 can determine a target first timestamp among the at least one first timestamp. In addition, the second apparatus 130 can determine a target second timestamp among the at least one second timestamp. Then, the second apparatus 130 can calculate the service interruption time based on the target first timestamp and the target second timestamp.

In some embodiments, the service interruption time can be obtained by adding a time for detecting occurrence of a dLOC to a result of subtracting the target first timestamp from the target first timestamp. In some embodiments, the time for detecting occurrence of the dLOC may be 10 ms.

In some embodiments, the target first timestamp is the minimum first timestamp among the at least one first timestamp. In some embodiments, the target second timestamp is the maximum second timestamp among the at least one second timestamp.

According to the embodiments described above, it can be accomplished to perform an in-service measurement for a traffic hit time, without the need to stop the user traffic and use an external tester to measure the hit time of the test traffic generated by the tester.

In the implementation described above, in order to measure the traffic hit time of the Ethernet service, the following pre-provisions should be executed. First of all, the Ethernet service should be enabled to carry the user dataflow. For example, the Ethernet service may include an Ethernet line service (E-line), an Ethernet local area network service (E-LAN), an Ethernet tree service (E-tree), an Ethernet access service (E-access), or the like.

Second, the Ethernet protection mechanism should be enabled to provide redundant paths for the service. In some embodiments, the Ethernet protection mechanism may be, for example, an ITU-T G.8032 Ethernet Ring Protection (ERP) mechanism, an ITU-T G.8031 Ethernet Linear Protection (ELP) mechanism, or the like. Third, the timing on all the network elements related to the Ethernet service should be aligned. In some embodiments, the timing alignment can be implemented, for example, via IEE 1588. Alternatively, in other embodiments, other possible clock synchronization method may also be utilized.

In addition, a communication channel between a collection node and each network element should be established to collect timestamps from all network elements. In some embodiments, the collection node may be a network management system (NMS), or any other network element.

In the implementation described above, in order to monitor the connectivity and continuity of the service, it is required to create Up Maintenance End Points (UP MEPs) on all UNIs within the same Ethernet service, and enable a CCM tool on each UP MEP, to send CCM frames with a constant size and a constant period.

According to ITU-T Y.1731 and IEE Std 802.1Q, when the continuity of the monitored service is lost, a dLOC is detected if 3 continuous CCM frames are not received.

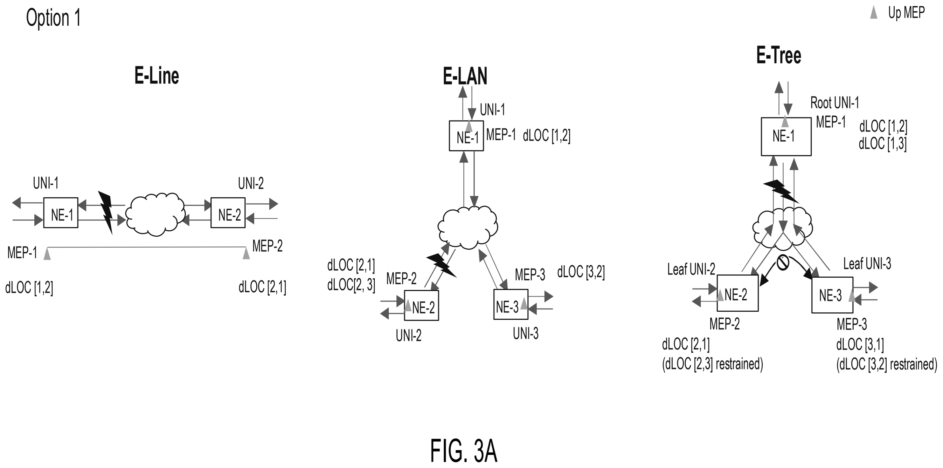

In some embodiments, it is assumed that there are n MEPs in the same Maintenance End Group (MEP)/Maintenance Association (MA) of the same Ethernet service, as shown in Figs. 3A to 3B.

Figs. 3A to 3B illustrate a schematic diagram of performing dLOC detection for an E-Line, an E-LAN, and an E-tree service when protection switching occurs according to example embodiments of the present disclosure, respectively. Wherein, as depicted in Fig. 3A, option 1 is the case that dLOC[$i,j$] can be monitored and reported separately. In option 1, if a local MEP $i$ (e.g., the MEP-1 as shown therein) does not receive a CCM frame of the same Ethernet service from a remote MEP $j$ (e.g., the MEP-2 or MEP-3 as shown therein) in the same MA, it can detect and report dLOC[$i,j$] of each remote MEP $j$ ($i,j \in n$).

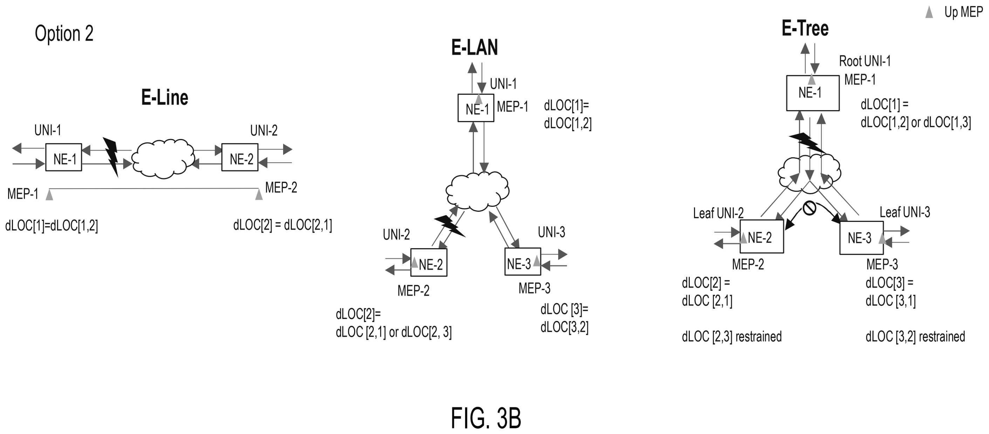

As depicted in Fig. 3B, option 2 is the case that dLOC[i] can be monitored and reported as a whole. In the option 2, each local MEP $i$ (e.g., the MEP-1 as shown therein) can only report the synthetic dLOC[$i$]=OR {dLOC[$i,j$]}, where $j \in n$, and $j \neq i$.

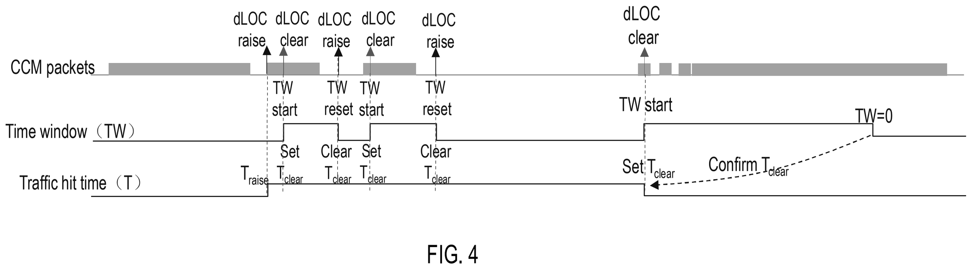

Fig. 4 illustrates a schematic diagram of a mechanism for determining $T_{raise}$ and $T_{clear}$ for a specific dLOC. As shown therein, per local MEP i on the network element, a raise time and a clear time of each dLOC (i.e., dLOC[$i$] or dLOC[$i, j$]) can be recorded as follows: a timestamp of the first occurrence of dLOC raise can be marked as $T_{raise}$; and a timestamp of the last occurrence of dLOC clear can be marked as $T_{clear}$.

In particular, in some embodiments, the timestamp of the first occurrence of dLOC clear is marked as $T_{clear}$, and the time window (TW) timer is triggered simultaneously to filter the dLOC generated due to chattering. In some embodiments, the time window in intended to filter out the transient dLOC. Moreover, the time window can also be used to clear or integrate multiple interruptions as one interruption. It would be appreciated that the size of the time window is a time that all the CCM frames are valid, without an occurrence of a dLOC.

In some embodiments, if a dLOC occurs during the time window, the $T_{clear}$ is cleared, and the time window timer is reset. Then, as similarly described above, the timestamp of the next dLOC clear is marked as $T_{clear}$, and the time window timer is triggered again. Alternatively, in some embodiments, if no dLOC occurs during the time window, $T_{clear}$ is confirmed.

It is worth noting that the size of the time window is determined by a duration of a traffic interruption to be captured. For example, in some embodiments, the protection switching completion time is expected to be less than 60 ms (including a detection time of 10 ms, and a switching time of 50 ms), the size of the time window should be 60 ms. Using the time window, multiple chattering interruptions during 60 ms can be filtered and merged as a single interruption.

In some embodiments, each network element (NE) can timestamp a state change time ($T_p[X]$) of the protection mechanism. For example, the state change may include an ERP ring state change, or a link aggregation group (LAG) active/standby switchover.

The traffic hit time T of the method as shown in Figs. 3A to 3B can be calculated as follows:

According to option 1 in Fig. 3A, dLOC[$i,j$] is monitored and reported. In the case, the traffic hit time T[$i,j$] per {$i,j$} can be calculated at the NE through the following equation:

$$T[i,j] = ( T_{clear}[i,j] - T_{raise}[i,j] ) + T_{LOC}$$

where MEP i is located at the NE X.

In addition, the service interruption time $T_{service}$ per Ethernet service can be calculated at a collection node (e.g., an NMS, or any other network elements) through the following equation:

$$T_{service} = ( MAX\{T_{clear}[i,j]\} - MIN\{ T_{raise}[i,j]\} ) + T_{LOC}$$

Note: in the case of option 1, only when $T_{raise}[i,j] < T_p[X] <= T_{clear}[i,j]$ (i.e., Ethernet protection switching occurs between $T_{raise}[i,j]$ and $T_{clear}[i,j]$) is met, Traise[i,j] and $T_{clear}[i,j]$ are valid.

Alternatively, according to option 2 in Fig. 3B, dLOC[i] can be monitored and reported as a whole. In the case, the traffic hit time T[i] per {i} can be calculated at the NE through the following equation:

$$T[i] = ( \; T_{clear}[i] - T_{raise}[i] \; ) + T_{LOC},$$

where MEP *i* is located at NE X.

In addition, the service interruption time $T_{service}$ per Ethernet service can be calculated at a collection node (e.g., an NMS, or any other network element) through the following equation:

$$T_{service} = ( \; MAX\{T_{clear}[i]\} - MIN\{T_{raise}[i]\} \; ) + T_{LOC}$$

Note: in the case of option 2, only when $T_{raise}[i] < T_p[X] <= T_{clear}[i]$ (i.e., Ethernet protection switching occurs between $T_{raise}[i]$ and $T_{clear}[i]$) is met, $T_{raise}[i]$ and $T_{clear}[i]$ are valid.

It is worth noting that TLOC as mentioned above is a time required for detecting a dLOC. According to the ITU-T G.8021, it takes a K×CCM period for dLOC detection, where 3.25ms<=K<=3.5ms.

In some embodiments, to achieve the millisecond accuracy, $T_{raise}$, $T_{clear}$, and $T_p$ may have an accuracy higher than or equal to a predetermined accuracy, respectively. For example, in some embodiments, the predetermined accuracy may be 1 ms, or may be less than 1ms.

In a further implementation of the present disclosure, it is required to record timestamps of raise and clear of a loss of continuity (LOC) defect and a remote defect indication (RDI) defect.

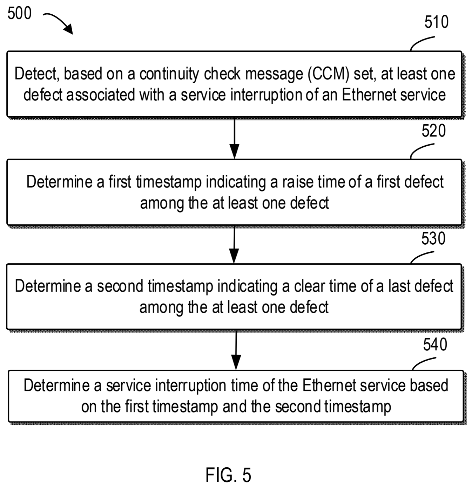

Fig. 5 illustrates a flowchart of another communication process 500 according to example embodiments of the present disclosure. The communication process 500 can be implemented at an apparatus (e.g., the apparatus 120 as shown in Fig. 1A). In some embodiments, the apparatus 120 may include a network element (NE). For the purpose of discussion, reference will be made to Fig. 1A to describe the communication process 500 from the perspective of the apparatus 120.

As shown in Fig. 5, at block 510, the apparatus 120 detects, based on a continuity check message (CCM) set, at least one defect associated with a service interruption of the Ethernet service. In some embodiments, the Ethernet service herein may include an Ethernet line service (E-line), an Ethernet local area network service (E-LAN), an Ethernet tree service (E-tree), an Ethernet access service (E-access), or the like. In the embodiments, the at least one defect used herein may include at least one of a Loss Of Continuity (LOC) defect, or a remote defect indication (RDI) defect. In some other embodiments, the at least one defect used herein may include other similar defects specified or to be specified in related protocols. In some embodiments, the CCM set can be sent to the apparatus 120 with a constant size and a constant period. In some other embodiments, the manner for sending a CCM set is not limited to the one described above, i.e., a CCM set may also be sent in other manners that can implement the example embodiments.

At block 520, the apparatus 120 can determine a first timestamp indicating a raise time of a first defect among the at least one defect. At block 530, the apparatus 520 can determine a second timestamp indicating a clear time of the last defect among the at least one defect. In addition, at block 540, the apparatus 120 can determine a service interruption time of the Ethernet service based on the first timestamp and the second timestamp.

In some embodiments, in order to determine the second timestamp, based on detecting clearance of a defect among the at least one defect, the apparatus 120 can record a clear time of the defect as a candidate second timestamp. Moreover, the apparatus 120 can start a timer corresponding to a predetermined time window. Further, based on determining that no occurrence of a defect is detected in the predetermined time window, the apparatus 120 can determine the candidate second timestamp as the second time stamp.

In some embodiments, based on determining that occurrence of a defect is detected in the predetermined time window, the apparatus 120 can clear the candidate second timestamp. In addition, the apparatus 120 can reset the timer. In some embodiments, a length of the predetermined time window can be determined based on an expected duration of a service interruption.

In some embodiments, the service interruption may be caused by the Ethernet protection mechanism of the Ethernet service. In the embodiments, the apparatus 120 can determine a third timestamp indicating a state change time of the Ethernet protection mechanism. In some embodiments, the apparatus can determine validity of the first timestamp and the second timestamp based on the third timestamp.

In some embodiments, in order to determining validity of the first timestamp and the second timestamp, the apparatus 120 can determine that the first timestamp and the second timestamp are valid based on determining that the third timestamp is greater than the first timestamp and less than or equal to the second timestamp.

In some embodiments, the apparatus 120 may be a local apparatus, and the at least one defect may include at least one defect for a separate remote apparatus. In some embodiments, the service interruption time can be determined as: the second timestamp associated with the separate remote apparatus minus the first timestamp associated with the separate remote apparatus, plus a time for detecting occurrence of a dLOC. In some embodiments, granularity of the service interruption time may be per user data flow associated with the Ethernet service.

In some embodiments, in order to determine the service interruption time, the apparatus 120 can determine a minimum first timestamp among a plurality of first timestamps for a plurality of remote apparatuses. Moreover, the apparatus 120 can determine a maximum second timestamp among a plurality of second timestamps for a plurality of remote apparatuses. Then, the apparatus 120 can calculate the service interruption time based on the minimum first timestamp, the maximum second timestamp, and the time for detecting a defect occurrence. In those embodiments, granularity of the service interruption time may be per Ethernet service.

In some embodiments, the apparatus 120 may be a local apparatus, and the at least one defect may include at least one synthetic defect for a plurality of remote apparatuses. In those embodiments, the service interruption time can be determined as: the second timestamp associated with the at least one synthetic defect minus the first timestamp associated with the at least one synthetic defect, plus a time for detecting occurrence of a defect. In those embodiments, granularity of the service interruption time may be per user network interface (UNI) associated with the Ethernet service. Alternatively, in some embodiments, granularity of the service interruption time may be per Ethernet service.

In some embodiments, the first timestamp, the second timestamp, and the third timestamp may have an accuracy greater than or equal to a predetermined accuracy, respectively. For example, the predetermined accuracy may be 1 ms, or may be less than 1 ms.

In the implementation described above, in order to measure a traffic hit time of the Ethernet service, the following pre-provisions can be executed. First of all, as described similarly in the first implementation, the Ethernet service should be enabled to carry a user data flow. Second, as described similarly in the first implementation, the Ethernet protection mechanism should be enabled to provide redundant paths for the service.

It is worth noting that the method is provided to calculate locally a traffic hit time by any NE, and thus, there is no need for timing alignment among NEs to align timestamps reported by each NE, nor it is needed to synthesize, by a collection node, the timestamps reported by all the NEs.

In addition, as described similarly in the first implementation, in some embodiments, in order to monitor the connectivity and continuity of the Ethernet service, it is required to create Up Maintenance End Points (UP MEPs) on all UNIs within the same Ethernet service, and enable a CCM tool on each UP MEP, to send CCM frames with a constant size and a constant period. However, the difference from the first implementation is to monitor raising and clearing of a dRDI, in addition to the dLOC.

According to ITU-T Y.1731 and IEE Std 802.1Q, when the continuity of the monitored service is lost, a LOC defect (dLOC) is detected if 3 continuous CCM frames are not received. Furthermore, when a peer MEP detects a dLOC or other defects in the receiving direction, it sets a RDI bit in CCM frames in a reverse direction, to notify a remote failure.

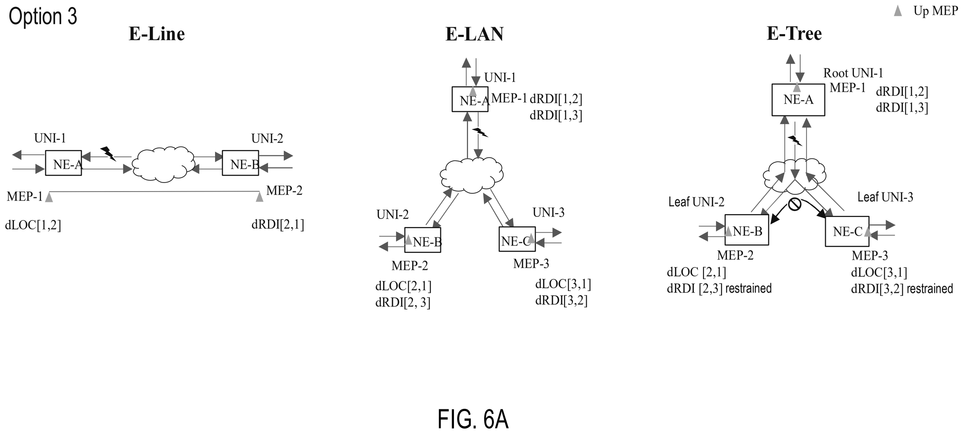

In some embodiments, it is assumed that there are n MEPs in the same maintenance end group (MEP)/maintenance association (MA) of the same Ethernet service, as shown in Figs. 6A to 6B.

Figs. 6A to 6B illustrate a schematic diagram of performing dLOC or dRDI detection for an E-Line, an E-LAN, and an E-tree service when protection switching occurs according to example embodiments of the present disclosure, respectively. Wherein, as depicted in Fig. 6A, option 3 is the case that dLOC[$i,j$] and dRDI[$i,j$] can be separately monitored and reported. In option 3, if a local MEP i (e.g., the MEP-1 as shown therein) does not receive a CCM frame of the same Ethernet service from a remote peer MEP j (e.g., the MEP-2 or MEP-3 as shown therein) in the same MA, it can detect and report dLOC[$i,j$] of each remote MEP $j$ ($i,j \in n$).

Alternatively, when a local MEP i (e.g., the MEP-1 as shown therein) receives a CCM frame with a RDI bit from a remote peer MEP j (e.g., the MEP-2 or MEP-3 as shown therein) in the same MA, it can detect and report dRDI[$i,j$] of each remote MEP $j$ ($i,j \in n$).

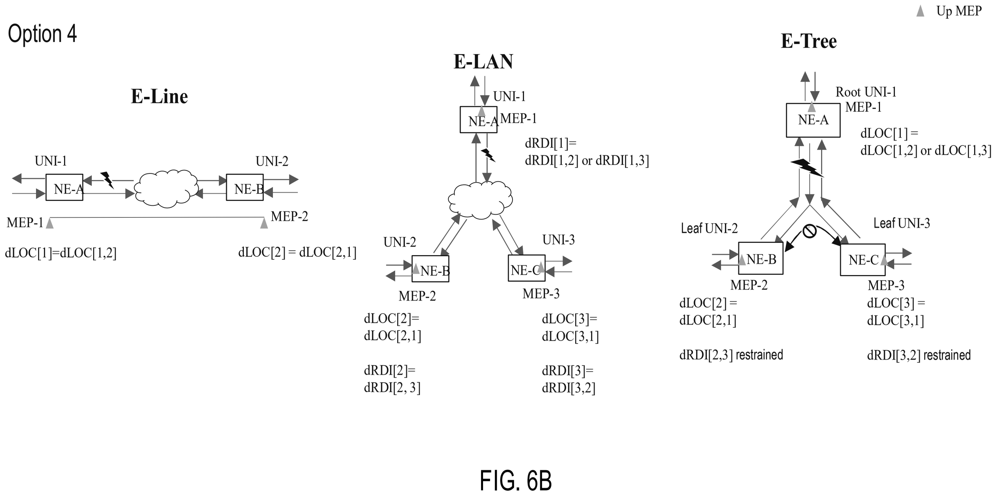

In addition, as depicted in Fig. 6B, option 4 is the case that dLOC[i] can be monitored and reported as a whole. In option 4, each local MEP i (e.g., the MEP-1 as shown therein) can only report the synthetic dLOC[$i$]=OR {dLOC[$i,j$]} or the synthetic dRDI [$i$]=OR {dRDI [$i,j$]}, where $j \in n,$ and $j \neq i$.

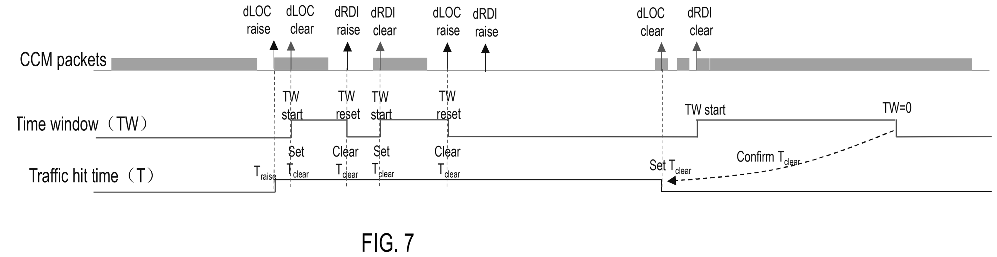

Fig. 7 illustrates a schematic diagram of a mechanism for determining $T_{raise}$ and $T_{clear}$ for a specific dLOC or dRDI. As shown in Fig. 7, per local MEP $i$ on a network element, a raise time and a clear time of each dLOC (i.e., dLOC[$i$], or dLOC[$i,j$]) or each dRDI (i.e., dRDI[$i$], or dRDI[$i,j$]) can be recorded as: a timestamp of the first occurrence of dLOC/dRDI raise can be marked as $T_{raise}$; and a timestamp of the last occurrence of dLOC/dRDI clear can be marked as $T_{clear}$.

In particular, in some embodiments, the timestamp of the first occurrence of dLOC/dRDI clear is marked as $T_{clear}$, and the Time Window (TW) timer is triggered simultaneously to filter the dLOC/dRDI generated due to chattering. In some embodiments, the time window in intended to filter out the transient dLOC/dRDI. Moreover, the time window can also be used to clear or integrate multiple interruptions as one interruption. It would be appreciated that the size of the time window is a time that all the CCM frames are valid, without a dLOC raised.

In some embodiments, if a dLOC/dRDI occurs during the time window, the $T_{clear}$ is cleared, and the time window timer is reset. Then, as described similarly in the above, the timestamp of the next dLOC/dRDI clear is marked as $T_{clear}$, and the time window timer is triggered again. Alternatively, in some embodiments, if no dLOC/dRDI occurs during the time window, $T_{clear}$ is confirmed.

It is noted that the size of the time window is determined by a duration of a traffic interruption to be captured. For example, in some embodiments, the protection switching completion time is expected to be less than 60 ms (including a detection time of 10 ms, and a switching time of 50 ms), the size of the time window should be 60 ms. Using the time window, multiple chattering interruptions during 60 ms can be filtered and merged as a single interruption.

In some embodiments, each network element (NE) can timestamp a state change time ($T_p[X]$) of the protection mechanism. For example, the state change may include an ERP ring state change, or a LAG active/standby switchover.

The traffic hit time T according to the method as shown in Figs. 6A to 6B can be calculated as follows:

According to option 3 in Fig. 6A, dLOC[$i,j$]/ dLOC[$i,j$] is monitored and reported. In the case, the traffic hit time T[$i,j$] per {$i,j$} can be calculated at the NE through the following equation:

$$T[i,j] = ( T_{clear}[i,j] - T_{raise}[i,j] ) + T_{LOC}$$

where MEP $i$ is located at the NE X.

In addition, the service interruption time $T_{service}$ per Ethernet service can be calculated at an NE through the following equation:

$$T_{service} = ( MAX\{T_{clear}[i,j]\} - MIN\{T_{raise}[i,j]\} ) + T_{LOC}$$

Note: in the case of option 3, only when $T_{raise}[i,j] < T_p[X] <= T_{clear}[i,j]$ (i.e., Ethernet protection switching occurs between $T_{raise}[i,j]$ and $T_{clear}[i,j]$) is met, $T_{raise}[i,j]$ and $T_{clear}[i,j]$ are valid.

Alternatively, according to option 4 in Fig. 6B, dLOC[$i$]/ dRDI[$i$] can be monitored and reported as a whole. In the case, the traffic hit time T[$i$] per {$i$} can be calculated at the NE through the following equation:

$$T[i] = ( T_{clear}[i] - T_{raise}[i] ) + T_{LOC}$$

where MEP $i$ is located at NE X.

In addition, the service interruption time $T_{service}$ per Ethernet service can be calculated at an NE through the following equation:

$$T_{service} = ( MAX\{T_{clear}[i]\} - MIN\{T_{raise}[i]\} ) + T_{LOC}$$

Note: in the case of option 4, only when $T_{raise}[i] < T_p[X] <= T_{clear}[i]$ (i.e., Ethernet protection switching occurs between $T_{raise}[i]$ and $T_{clear}[i]$) is met, $T_{raise}[i]$ and $T_{clear}[i]$ are valid.

It is worth noting that TLOC as mentioned above is a time required for detecting a dLOC. According to the ITU-T G.8021, it takes a K×CCM period for dLOC detection, where 3.25ms<=K<=3.5ms.

In some embodiments, to achieve the millisecond accuracy, the accuracy of $T_{raise}$, $T_{clear}$, and $T_p$ may be higher than or equal to a predetermined accuracy, respectively. For example, in some embodiments, the predetermined accuracy may be 1 ms, or may be less than 1ms.

It would be also noted here that the dRDI detection in the second implementation of the present disclosure may be lagged some time since the dRDI is detected after a CCM with a RDI bit passes over the network. Therefore, the lag time depends on the network size and varies when the path changes after path switchover.

Moreover, in the present application, the mechanism for determining a $T_{clear}$ is not limited to the method mentioned above, to which other methods for filtering a chattering dLOC or dRDI can be applied as well. In addition, the traffic hit time per Ethernet service may also be calculated using other appropriate methods.

With the method according to the above embodiments, it can be accomplished to perform an in-service measurement for a traffic hit time, without the need to stop the user traffic and use an external tester to measure a hit time of a test traffic generated by a tester. As compared with the traditional measurement method, the method according to the present disclosure has various advantages which are shown in Table 1 below.

Table 1 shows the multiple significant advantages of the CCM frame-based measurement method provided by the embodiments of the present disclosure over the traditional offline measurement method, and the OAM frame-based in-service measurement method.

| | Traditional Method | OAM frame-based Methods | Method according to embodiments of present disclosure |
|---|---|---|---|
| Solution | The test pattern is generated by an external tester. | Use ETH OAM (e.g., synthetic loss measurement (SLM) with a sequence number of and/or timestamps, or a similar tool) protocol frames embedded in the user data flow. | Use fast ETH OAM CCM frames (without a sequence number) to monitor the continuity of the Ethernet service, and timestamp a dLOC and/or dRDI to determine the start or end of the traffic interruption. |
| Universality | High | Medium (as SLM or the similar tool is optional) | High (as CCM is mandatory and widely supported) |
| Impact on user traffic | Out of service | In service | In service |
| Traffic hit time accuracy | Low accuracy as it does not measure the real traffic | Sufficient accuracy of ms | Sufficient accuracy of ms |
| Traffic hit time | Cover the entire protected traffic restoration time as per ITU-T G.808.1 | Cover the entire protected traffic restoration time as per ITU-T G.808.1 | Cover the entire protected traffic restoration time as per ITU-T G.808.1 |
| Traffic hit time in case of multiple switching operations | The total traffic hit time experienced during all switching operations | The traffic hit time per time switching operation | The traffic hit time per time switching operation |
| Granularity of monitored traffic | Per user flow | Per user flow | Per user flow<br>Per UNI<br>Per service |
| Types of applicable networks | Ethernet services over any carrier networks (native Ethernet networks, Ethernet over MPLS networks, Ethernet or IP networks, etc.) | Ethernet services over any carrier networks (native Ethernet networks, Ethernet over MPLS networks, Ethernet or IP networks, etc.) | Ethernet services over any carrier networks (native Ethernet networks, Ethernet over MPLS networks, Ethernet or IP networks, etc.) |

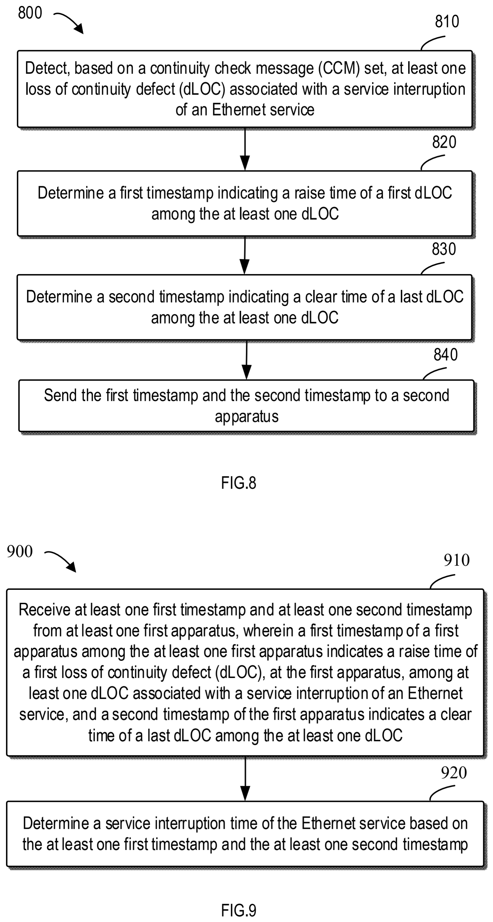

Fig. 8 illustrates a flowchart of an example method 800 implemented at a first apparatus (e.g., the apparatus 120 as shown in Fig. 1A) according to some embodiments of the present disclosure. For the purpose of discussion, reference will be made to Fig. 1A to describe the method 800 from the perspective of the first apparatus.

As shown in Fig. 8, the method may include: at block 810, detecting, based on a continuity check message (CCM) set, at least one loss of continuity defect (dLOC) associated with a service interruption of an Ethernet service. The method may also include: at block 820, determining a first timestamp indicating a raise time of a first dLOC among the at least one dLOC. The method may further include: at block 830, determining a second timestamp indicating a clear time of a last dLOC among the at least one dLOC. In addition, the method may include: at block 840, sending the first timestamp and the second timestamp to a second apparatus.

In some embodiments, the method may further include: determining the second timestamp by: based on detecting clearance of a dLOC among the at least one dLOC, recording a clear time of the dLOC as a candidate second timestamp; starting a timer corresponding to a predetermined time window; and based on determining that no occurrence of a dLOC is detected in the predetermined time window, determining the candidate second timestamp as the second timestamp.

In some embodiments, the method may further include: based on determining that occurrence of a dLOC is detected in the predetermined time window, clearing the candidate second timestamp; and resetting the timer.

In some embodiments, a length of the predetermined time window can be determined based on an expected duration of the service interruption.

In some embodiments, the first apparatus may be a local first apparatus, and the at least one dLOC may include: at least one dLOC for a separate remote first apparatus.

Alternatively, in some embodiments, the first apparatus may be a local first apparatus, and the at least one dLOC may include: at least one synthetic dLOC for a plurality of remote first apparatuses.

In some embodiments, the service interruption may be caused by an Ethernet protection mechanism of the Ethernet service.

In some embodiments, the method may further include: determining a third timestamp indicating a state change time of the Ethernet protection mechanism; and determining, based on the third timestamp, validity of the first timestamp and the second timestamp.

In some embodiments, the method may further include: determining the validity of the first timestamp and the second timestamp by: based on determining that the third timestamp is greater than the first timestamp and less than or equal to the second timestamp, determining that the first timestamp and the second timestamp are valid.

In some embodiments, the method may further include: determining a service interruption time of the Ethernet service based on the first timestamp and the second timestamp.

In some embodiments, the service interruption time can be determined as: the second timestamp minus the first timestamp, plus a time for detecting occurrence of a dLOC.

In some embodiments, the first apparatus may be a local first apparatus, and in a case that the at least one dLOC is at least one dLOC for a separate remote first apparatus, granularity of the service interruption time may be per user data flow associated with the Ethernet service.

Alternatively, in some embodiments, the first apparatus may be a local first apparatus, and in a case that the at least one dLOC is at least one synthetic dLOC for a plurality of remote first apparatuses, granularity of the service interruption time may be per user network interface (UNI) associated with the Ethernet service.

In some embodiments, timing of the first apparatus is aligned with timing of other first apparatuses associated with the Ethernet service.

In some embodiments, the CCM set can be sent to the first apparatus with a constant size and a constant period.

In some embodiments, accuracy of the first timestamp, the second timestamp and the third timestamp may be higher than or equal to a predetermined accuracy, respectively. For example, the predetermined accuracy may be 1 ms, or may be less than 1 ms.

In some embodiments, the Ethernet service may include: an Ethernet line service (E-line); an Ethernet local area network service (E-LAN); an Ethernet tree service (E-tree); or an Ethernet access service (E-access).

In some embodiments, the first apparatus may include a network element (NE), and the second apparatus may include comprise a network management system (NMS) device or an NE.

Fig. 9 illustrates a flowchart of an example method 900 implemented at a second apparatus (e.g., the apparatus 130 as shown in Fig. 1A) according to some embodiments of the present disclosure. For the purpose of discussion, reference will be made to Fig. 1A to describe the method 900 from the perspective of the second apparatus.

As shown Fig. 9, the method may include: at block 910, receiving at least one first timestamp and at least one second timestamp from at least one first apparatus, wherein a first timestamp of a first apparatus among the at least one first apparatus indicates a raise time of a first loss of continuity defect (dLOC), at the first apparatus, among at least one dLOC associated with a service interruption of an Ethernet service, and a second timestamp of the first apparatus indicates a clear time of a last dLOC among the at least one dLOC. The method may also include: at block 920, determining a service interruption time of the Ethernet service based on the at least one first timestamp and the at least one second timestamp.

In some embodiments, the method may further include: determining the service interruption time by: determining a target first timestamp among the at least one first timestamp; determining a target second timestamp among the at least one second timestamp; and calculating the service interruption time based on the target first timestamp and the target second timestamp.

In some embodiments, the service interruption time can be calculated as: the target second timestamp minus the target first timestamp plus a time for detecting occurrence of a dLOC.

In some embodiments, the target first timestamp may be a minimum first timestamp among the at least one first timestamp.

In some embodiments, the target second timestamp may be a maximum second timestamp among the at least one second timestamp.

In some embodiments, the first apparatus may be a local first apparatus, and the at least one dLOC may include: at least one dLOC for a separate remote first apparatus.

Alternatively, in some embodiments, the first apparatus may be a local first apparatus, and the at least one dLOC may include: at least one synthetic dLOC for a plurality of remote first apparatuses.

In some embodiments, granularity of the service interruption time may be per Ethernet service.

In some embodiments, timing of the at least one first apparatus is aligned.

In some embodiments, the CCM set can be sent to the first apparatus with a constant size and a constant period.

In some embodiments, accuracy of the first timestamp and the second timestamp may be higher than or equal to a predetermined accuracy, respectively. For example, the predetermined accuracy may be 1 ms, or may be less than 1 ms.

In some embodiments, the Ethernet service may include: an Ethernet line service (E-line); an Ethernet local area network service (E-LAN); an Ethernet tree service (E-tree); or an Ethernet access service (E-access).

In some embodiments, the first apparatus may include a network element (NE), and the second apparatus may include a network management system (NMS) device or an NE.

In some embodiments, an apparatus (e.g., the apparatus 120 as shown in Fig. 1A, hereinafter referred to as first apparatus) capable of executing the method 800 may include means for executing respective steps of the method 800. The means can be implemented in any appropriate form. For example, the means may be implemented in a circuit or a software module.

In some embodiments, the apparatus may include: means for detecting, based on a continuity check message (CCM) set, at least one loss of continuity defect (dLOC) associated with a service interruption of an Ethernet service.

In some embodiments, the apparatus may also include: means for determining a first timestamp indicating a raise time of a first dLOC among the at least one dLOC.

In some embodiments, the apparatus may further include: means for determining a second timestamp indicating a clear time of a last dLOC among the at least one dLOC.

In some embodiments, the apparatus may further include; means for sending the first timestamp and the second timestamp to a second apparatus.

In some embodiments, the apparatus may further include: means for determining the second timestamp by: based on detecting clearance of a dLOC among the at least one dLOC, recording a clear time of the dLOC as a candidate second timestamp; starting a timer corresponding to a predetermined time window; and based on determining that no occurrence of a dLOC is detected in the predetermined time window, determining the candidate second timestamp as the second timestamp.

In some embodiments, the apparatus may further include: means for, based on determining that occurrence of a dLOC is detected in the predetermined time window, clearing the candidate second timestamp; and means for resetting the timer.

In some embodiments, a length of the predetermined time window can be determined based on an expected duration of the service interruption.

In some embodiments, the first apparatus may be a local first apparatus, and the at least one dLOC may include: at least one dLOC for a separate remote first apparatus.

Alternatively, in some embodiments, the first apparatus may be a local first apparatus, and the at least one dLOC may include: at least one synthetic dLOC for a plurality of remote first apparatuses.

In some embodiments, the service interruption may be caused by an Ethernet protection mechanism of the Ethernet service

In some embodiments, the apparatus may further include: means for determining a third timestamp indicating a state change time of the Ethernet protection mechanism; and means for determining, based on the third timestamp, validity of the first timestamp and the second timestamp.

In some embodiments, the apparatus may further include: means for determining the validity of the first timestamp and the second timestamp by: based on determining that the third timestamp is greater than the first timestamp and less than or equal to the second timestamp, determining that the first timestamp and the second timestamp are valid.

In some embodiments, the apparatus may further include: means for determining a service interruption time of the Ethernet service based on the first timestamp and the second timestamp.

In some embodiments, the service interruption time can be determined as: the second timestamp minus the first timestamp, plus a time for detecting occurrence of a dLOC.

In some embodiments, the first apparatus may be a local first apparatus, and in a case that the at least one dLOC is at least one dLOC for a separate remote first apparatus, granularity of the service interruption time may be per user data flow associated with the Ethernet service.

Alternatively, in some embodiments, the first apparatus may be a local first apparatus, and in a case that the at least one dLOC is at least one synthetic dLOC for a plurality of remote first apparatuses, granularity of the service interruption time may be per user network interface (UNI) associated with the Ethernet service.

In some embodiments, timing of the first apparatus is aligned with timing of other first apparatuses associated with the Ethernet service.

In some embodiments, the CCM set is sent to the first apparatus with a constant size and a constant period.

In some embodiments, accuracy of the first timestamp, the second timestamp and the third timestamp may be higher than or equal to a predetermined accuracy, respectively. For example, the predetermined accuracy may be 1 ms, or may be less than 1 ms.

In some embodiments, the Ethernet service may include: an Ethernet line service (E-line); an Ethernet local area network service (E-LAN); an Ethernet tree service (E-tree); or an Ethernet access service (E-access).

In some embodiments, the first apparatus may include a network element (NE), and the second apparatus may include a network management system (NMS) device or an NE.

In some embodiments, the first apparatus further includes means for executing other steps of the method 800 according to some embodiments. In some embodiments, the means include at least one processor and at least one memory comprising computer program code, where the at least one memory and the computer program code are configured, together with the at least one processor, to cause execution of the first apparatus.

In some embodiments, an apparatus (e.g., the apparatus 130 as shown in Fig. 1A, hereinafter referred to as second apparatus) capable of executing the method 900 may include means for executing respective steps of the method 900. The means can be implemented in any appropriate form. For example, the means can be implemented in a circuit or a software module.

In some embodiments, the apparatus may include: means for receiving at least one first timestamp and at least one second timestamp from at least one first apparatus, wherein a first timestamp of a first apparatus among the at least one first apparatus indicates a raise time of a first loss of continuity defect (dLOC), at the first apparatus, among at least one dLOC associated with a service interruption of an Ethernet service, and a second timestamp of the first apparatus indicates a clear time of a last dLOC among the at least one dLOC.

In some embodiments, the apparatus may also include: means for determining a service interruption time of the Ethernet service based on the at least one first timestamp and the at least one second timestamp.

In some embodiments, the apparatus may further include: means for determining the service interruption time by: determining a target first timestamp among the at least one first timestamp; determining a target second timestamp among the at least one second timestamp; and calculating the service interruption time based on the target first timestamp and the target second timestamp.

In some embodiments, the service interruption time can be calculated as: the target second timestamp minus the target first timestamp plus a time for detecting occurrence of a dLOC.

In some embodiments, the target first timestamp may be a minimum first timestamp among the at least one first timestamp.

In some embodiments, the target second timestamp may be a maximum second timestamp among the at least one second timestamp.

In some embodiments, the first apparatus may be a local first apparatus, and the at least one dLOC may include: at least one dLOC for a separate remote first apparatus.

Alternatively, in some embodiments, the first apparatus may be a local first apparatus, and the at least one dLOC may include: at least one synthetic dLOC for a plurality of remote first apparatuses.

In some embodiments, granularity of the service interruption time may be per Ethernet service.

In some embodiments, timing of the at least one first apparatus is aligned.

In some embodiments, the CCM set can be sent to the first apparatus with a constant size and a constant period.

In some embodiments, accuracy of the first timestamp and the second timestamp may be higher than or equal to a predetermined accuracy, respectively. For example, the predetermined accuracy may be 1 ms, or may be less than 1 ms.

In some embodiments, the Ethernet service may include: an Ethernet line service (E-line); an Ethernet local area network service (E-LAN); an Ethernet tree service (E-tree); or an Ethernet access service (E-access).

In some embodiments, the first apparatus may include a network element (NE), and the second apparatus may include a network management system (NMS) device or an NE.

In some embodiments, the second apparatus further includes means for executing other steps of the method 900 according to some embodiments. In some embodiments, the means include at least one processor and at least one memory comprising computer program code, where the at least one memory and the computer program code are configured, together with the at least one processor, to cause execution of the second apparatus.

In some embodiments, an apparatus (e.g., the apparatus 120 as shown in Fig. 1A) capable of executing the communication process 500 may include means for executing respective steps of the method 500. The means can be implemented in any appropriate form. For example, the means may be implemented in a circuit or a software module.

In some embodiments, the apparatus may include: means for detecting, based on a continuity check message (CCM) set, at least one defect associated with a service interruption of an Ethernet service.

In some embodiments, the apparatus may further include means for determining a first timestamp indicating a raise time of a first defect among the at least one defect.

In some embodiments, the apparatus may further include means for determining a second timestamp indicating a clear time of a last defect among the at least one defect.

In some embodiments, the apparatus may further include means for determining a service interruption time of the Ethernet service based on the first timestamp and the second timestamp.

In some embodiments, the apparatus may further include: means for determining the second timestamp by:

based on detecting clearance of a defect among the at least one defect, recording a clear time of the defect as a candidate second timestamp; starting a timer corresponding to a predetermined time window; and based on determining that no occurrence of a defect is detected in the predetermined time window, determining the candidate second timestamp as the second timestamp.

In some embodiments, the apparatus may further include: means for clearing the candidate second timestamp based on determining that occurrence of a defect is detected in the predetermined time window; and means for resetting the timer.

In some embodiments, a length of the predetermined time window can be determined based on an expected duration of the service interruption.

In some embodiments, the service interruption may be caused by an Ethernet protection mechanism of the Ethernet service

In some embodiments, the apparatus may further include: means for determining a third timestamp indicating a state change time of the Ethernet protection mechanism; and means for determining, based on the third timestamp, validity of the first timestamp and the second timestamp.

In some embodiments, the apparatus may further include: means for determining the validity of the first timestamp and the second timestamp by: based on determining that the third timestamp is greater than the first timestamp and less than or equal to the second timestamp, determining that the first timestamp and the second timestamp are valid.

In some embodiments, the apparatus may be a local apparatus, and the at least one defect may include at least one defect for a separate remote apparatus.

In some embodiments, the service interruption time can be determined as: the second timestamp associated with the separate remote apparatus minus the first timestamp associated with the separate remote apparatus, plus a time for detecting occurrence of a defect.

In some embodiments, n granularity of the service interruption time is per user data flow associated with the Ethernet service.

In some embodiments, the apparatus may further include: means for determining the service interruption time by: determining a minimum first timestamp among a plurality of first timestamps for a plurality of remote apparatuses respectively; determining a maximum second timestamp among a plurality of second timestamps for the plurality of remote apparatuses respectively; and calculating the service interruption time based on the minimum first timestamp, the maximum second timestamp, and a time for detecting occurrence of a defect.

In those embodiments, granularity of the service interruption time may be per Ethernet service.

In some embodiments, the apparatus may be a local apparatus, and the at least one defect may include at least one synthetic defect for the plurality of remote apparatuses.

In some embodiments, the service interruption time can be determined as: the second timestamp associated with the separate remote apparatus minus the first timestamp associated with the separate remote apparatus, plus a time for detecting occurrence of a defect.

In some embodiments, granularity of the service interruption time may be per user network interface (UNI) associated with the Ethernet service.

Alternatively, in some embodiments, granularity of the service interruption time may be per Ethernet service.

In some embodiments, the at least one defect may include at least one of a loss of continuity defect (dLOC) or a remote defect indication defect (dRDI).

In some embodiments, the CCM set may be sent to the apparatus with a constant size and a constant period.

In some embodiments, accuracy of the first timestamp, the second timestamp and the third timestamp may be higher than or equal to a predetermined accuracy, respectively. For example, the predetermined accuracy may be 1 ms, or may be less than 1 ms.

In some embodiments, the Ethernet service may include: an Ethernet line service (E-line); an Ethernet local area network service (E-LAN); an Ethernet tree service (E-tree); or an Ethernet access service (E-access).

In some embodiments, the apparatus may include a network element (NE).

In some embodiments, the apparatus may further include means for executing other steps of the method 500 according to some embodiments. In some embodiments, the means include at least one processor and at least one memory comprising computer program code, where the at least one memory and the computer program code are configured, together with the at least one processor, to cause execution of the apparatus.

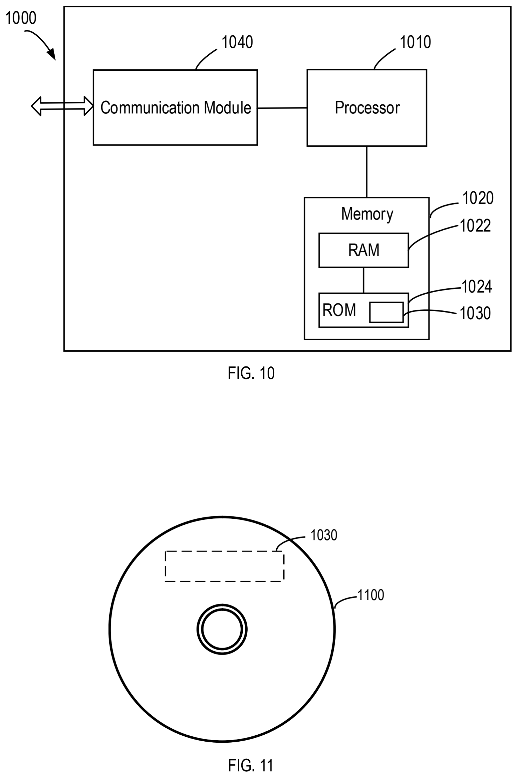

Fig. 10 illustrates a block diagram of a device 1000 adapted to implement embodiments of the present disclosure. The device 1000 can be provided to implement a communication device, for example, the apparatus 120 and the apparatus 130 as shown in Fig. 1A, or the like. As shown, the device 1000 includes one or more processors 1010, one or more memories 1020 coupled to the processor(s) 1010, and one or more communication modules 1040 coupled to the processor(s) 1010.

The communication module 1040 is used for bidirectional communication. The communication module 1040 may include at least one antenna for promoting communication. The communication interface can indicate any interface necessary for other network elements.

The processor 1010 can be of any appropriate type adapted to a local technical environment, and can include, but is not limited to, one or more of a general-purpose computer, a dedicated-purpose computer, a microcontroller, a digital signal controller, and a processor based on multi-core processor architecture. The device 1000 may include a plurality of processors, for example, dedicated integrated circuit chips temporally slave to a clock in synchronization with a main processor.

The memory 1020 may include one or more non-volatile memories, and one or more volatile memories. The examples of the non-volatile memory include, but are not limited to, a Read-Only Memory (ROM) 1024, an erasable programmable read-only memory, a flash memory, a hard disk, a compact disc, a digital versatile disk, and other magnetic and/or optical storage devices. Examples of volatile memory include, but are not limited to, a Random-Access Memory (RAM) 1022, and other non-volatile memories that do not persist throughout the duration of power outage.

The computer program 1030 includes computer executable instructions executed by an associated processor 1010. The program 1030 can be stored in the ROM 1024. The processor 1010 can perform any appropriate act and processing by loading the program 1030 into the RAM 1022.

The embodiments of the present disclosure can be implemented by means of the program 1030, to cause the device 1000 to perform any method or process of the present disclosure as depicted in Figs. 5, 8 and 9. The embodiments of the present disclosure can also be implemented by hardware or a combination of software and hardware.

In some embodiments, the program 1030 can be included tangibly in a computer readable medium that may be included in the device 1000 (e.g. the memory 1020) or other storage devices that can be accessed by the device 1000. The device 1000 can load the program 1030 from the computer readable medium to the RAM 1022 for execution. The computer readable medium may include any type of tangible non-volatile memory such as an ROM, an EPPROM, a flash memory, a hard disk, a CD, a DVD, and the like.

Fig. 11 illustrates an example of a computer readable medium 1100 in the form of CD or DVD. The computer readable medium 1100 has the program 1030 stored thereon. Although the computer readable medium 1100 is shown in Fig. 11 in the form of a CD or DVD, it may be in any other form suitable for carrying or storing the program 1030.

In general, various example embodiments of the present disclosure can be implemented in hardware or special purpose circuitry, software, logic, or any combination thereof. Some aspects may be implemented in hardware while some other aspects may be implemented by a controller, a microprocessor, or firmware or software executed by other computing device. When the respective aspects of the embodiments of the present disclosure are shown or depicted in block diagrams, flowcharts or using some other graphical representations, it would be appreciated that the blocks, devices, systems, techniques or methods described herein can be implemented, as non-limiting examples, in hardware, software, firmware, special purpose circuitry or logic, general purpose hardware or controllers or other computer devices, or some combinations thereof.

The present disclosure further provides at least one computer program product tangibly stored on a non-transient computer readable storage medium. The computer program product includes computer executable instructions, for example, those stored in the program module and executed in a target real or virtual processor to implement the method 90 as described above with reference to Fig. 9. Generally, the program module includes a routine, program, library, object, class, component, data structure and the like, which executes a particular task or implement a particular abstract data structure. In various example embodiments, the functions of the program modules can be merged or split among the program modules described herein. A computer executable instruction for a program module can be executed locally or within a distributed device. In a distributed device, a program module can be located in both of a local and a remote storage medium.

Computer program code for carrying out methods of the present disclosure may be written in any combination of one or more programming languages. The program code may be provided to a processor of a general-purpose computer, special purpose computer, or other programmable data processing apparatus, such that the program code, when executed by the processor or controller, causes the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of this disclosure, computer program code or related data can be carried by any appropriate carrier, such as a device, apparatus or processor can execute various processing and operations as described above. The example of the carrier includes a signal, a computer readable medium and the like.

The computer readable medium may be a computer readable signal medium or a computer readable storage medium. A machine-readable medium may include but not limited to an electronic, magnetic, optical, electromagnetic, infrared, or semiconductor system, apparatus or device, or any suitable combination of the foregoing. More specific examples of the machine-readable storage medium would include an electrical connection having one or more wires, a portable computer diskette, a hard disk, a Random Access Memory (RAM), a Read-Only Memory (ROM), an Erasable Programmable Read-Only Memory (EPROM or flash memory), an optical fiber, a portable Compact Disc Read-Only Memory (CD-ROM), an optical storage device, a magnetic storage device, or any suitable combination of the foregoing.

The term "non-transitory" or "non-transient" as used herein defines a medium per se (e.g., tangible, which is not a signal), rather than the persistence of data storage (e.g. RAM and ROM).

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the subject matter described herein, but rather as descriptions of features that may be specific to particular implementations. Certain features that are described in the context of separate implementations may also be implemented in combination in a single implementation. Conversely, various features that are described in the context of a single implementation may also be implemented in multiple implementations separately or in any suitable sub-combination.

Although the present disclosure has been described in language specific to structural features and/or methodological acts, it is to be understood that the subject matter specified in the appended claims is not necessarily limited to the specific features or acts described above. Rather, the specific features and acts described above are disclosed as example forms of implementing the claims.

**Claims**

1. A first apparatus comprising:

   at least one processor; and
   at least one memory storing instructions that, when executed by the at least one processor, cause the first apparatus at least to:

      detect (210), based on a continuity check message, CCM, set, at least one loss of continuity defect, dLOC, associated with a service interruption of an Ethernet service;
      determine (220) a first timestamp indicating a raise time of a first dLOC among the at least one dLOC;
      determine (230) a second timestamp indicating a clear time of a last dLOC among the at least one dLOC; and
      send (240) the first timestamp and the second timestamp to a second apparatus.

2. The first apparatus of claim 1, wherein the first apparatus is caused to determine the second timestamp by:

      based on detecting clearance of a dLOC among the at least one dLOC, recording a clear time of the dLOC as a candidate second timestamp;
      starting a timer corresponding to a predetermined time window; and
      based on determining that no occurrence of a dLOC is detected in the predetermined time window, determining the candidate second timestamp as the second timestamp,
      wherein for example the first apparatus is further caused to:

         based on determining that occurrence of a dLOC is detected in the predetermined time window, clear the candidate second timestamp; and
         reset the timer,
         wherein for example a length of the predetermined time window is determined based on an expected duration of the service interruption.

3. The first apparatus of any of claims 1 to 2, wherein A) the first apparatus is a local first apparatus, and the at least one dLOC comprises:

      at least one dLOC for a separate remote first apparatus; or
      at least one synthetic dLOC for a plurality of remote first apparatuses,
      and/or wherein B) the service interruption is caused by an Ethernet protection mechanism of the Ethernet service, and the first apparatus is further caused to:

         determine a third timestamp indicating a state change time of the Ethernet protection mechanism; and
         determine, based on the third timestamp, validity of the first timestamp and the second timestamp,
         wherein for example the first apparatus is caused to determine the validity of the first timestamp and the second timestamp by:

based on determining that the third timestamp is greater than the first timestamp and less than or equal to the second timestamp, determining that the first timestamp and the second timestamp are valid, and/or wherein C) the first apparatus is further caused to:

determine a service interruption time of the Ethernet service based on the first timestamp and the second timestamp,
wherein for example the service interruption time is determined as:

the second timestamp minus the first timestamp, plus a time for detecting occurrence of a dLOC,
wherein for example the first apparatus is a local first apparatus, and wherein:

the at least one dLOC is at least one dLOC for a separate remote first apparatus, and granularity of the service interruption time is per user data flow associated with the Ethernet service; or
the at least one dLOC is at least one synthetic dLOC for a plurality of remote first apparatuses, and the granularity of the service interruption time is per user network interface (UNI) associated with the Ethernet service,
and/or wherein D) at least one of the following:

timing of the first apparatus is aligned with timing of other first apparatuses associated with the Ethernet service;
the CCM set is sent to the first apparatus with a constant size and a constant period; or accuracy of the first timestamp, the second timestamp and the third timestamp is higher than or equal to a predetermined accuracy,
and/or wherein E) the Ethernet service comprises:

an Ethernet line service (E-line);
an Ethernet local area network service (E-LAN);
an Ethernet tree service (E-tree); or
an Ethernet access service (E-access),
and/or wherein F) the first apparatus comprises a network element (NE), and the second apparatus comprises a network management system (NMS) apparatus or an NE.

4. A second apparatus comprising:

at least one processor; and
at least one memory storing instructions that, when executed by the at least one processor, cause the second apparatus at least to:

receive at least one first timestamp and at least one second timestamp from at least one first apparatus, wherein a first timestamp of a first apparatus among the at least one first apparatus indicates a raise time of a first loss of continuity defect (dLOC), at the first apparatus, among at least one dLOC associated with a service interruption of an Ethernet service, and a second timestamp of the first apparatus indicates a clear time of a last dLOC among the at least one dLOC; and
determine a service interruption time of the Ethernet service based on the at least one first timestamp and the at least one second timestamp.

5. The second apparatus of claim 4, wherein the second apparatus is caused to determine the service interruption time by:

determining a target first timestamp among the at least one first timestamp;
determining a target second timestamp among the at least one second timestamp; and
calculating the service interruption time based on the target first timestamp and the target second timestamp, wherein for example the service interruption time is calculated as:
the target second timestamp minus the target first timestamp plus a time for detecting occurrence of a dLOC.

6. The second apparatus of claim 5, wherein at least one of the following:

the target first timestamp is a minimum first timestamp among the at least one first timestamp; or

the target second timestamp is a maximum second timestamp among the at least one second timestamp.

7. The second apparatus of any of claims 4 to 6, wherein A) the first apparatus is a local first apparatus, and the at least one dLOC comprises:

at least one dLOC for a separate remote first apparatus; or

at least one synthetic dLOC for a plurality of remote first apparatuses,

and/or wherein B) granularity of the service interruption time is per Ethernet service,

and/or wherein C) at least one of the following:

timing of the at least one first apparatus is aligned;

the CCM set is sent to the first apparatus with a constant size and a constant period; or

accuracy of the first timestamp and the second timestamp is higher than or equal to a predetermined accuracy,

and/or wherein D) the Ethernet service comprises:

an Ethernet line service (E-line);

an Ethernet local area network service (E-LAN);

an Ethernet tree service (E-tree); or

an Ethernet access service (E-access),

and/or wherein E) the first apparatus comprises a network element (NE), and the second apparatus comprises a network management system (NMS) apparatus or an NE.

8. An apparatus, comprising:

at least one processor; and

at least one memory storing instructions that, when executed by the at least one processor, cause the apparatus at least to:

detect, based on a continuity check message (CCM) set, at least one defect associated with a service interruption of an Ethernet service;

determine a first timestamp indicating a raise time of a first defect among the at least one defect;

determine a second timestamp indicating a clear time of a last defect among the at least one defect; and

determine a service interruption time of the Ethernet service based on the first timestamp and the second timestamp.

9. The apparatus of claim 8, wherein the apparatus is caused to determine the second timestamp by:

based on detecting clearance of a defect among the at least one defect, recording a clear time of the defect as a candidate second timestamp;

starting a timer corresponding to a predetermined time window; and

based on determining that no occurrence of a defect is detected in the predetermined time window, determining the candidate second timestamp as the second timestamp,

wherein for example the apparatus is caused to:

based on determining that occurrence of a defect is detected in the predetermined time window, clear the candidate second timestamp; and

reset the timer.

10. The apparatus of claim 10, wherein a length of the predetermined time window is determined based on an expected duration of the service interruption.

11. The apparatus of any of claims 8 to 10, wherein the service interruption is caused by an Ethernet protection mechanism of the Ethernet service, and the apparatus is further caused to:

determine a third timestamp indicating a state change time of the Ethernet protection mechanism; and

determine, based on the third timestamp, validity of the first timestamp and the second timestamp,

wherein for example the apparatus is caused to determine the validity of the first timestamp and the second timestamp by:

based on determining that the third timestamp is greater than the first timestamp and less than or equal to the second timestamp, determining that the first timestamp and the second timestamp are valid.

12. The apparatus of any of claims 8 to 11, wherein the apparatus is a local apparatus, and the at least one defect comprises at least one defect for a separate remote apparatus,
wherein for example the service interruption time is determined as:

the second timestamp associated with the separate remote apparatus minus the first timestamp associated with the separate remote apparatus, plus a time for detecting occurrence of a defect,
wherein for example granularity of the service interruption time is per user data flow associated with the Ethernet service,
wherein for example the apparatus is caused to determine the service interruption time by:

determining a minimum first timestamp among a plurality of first timestamps for a plurality of remote apparatuses respectively;
determining a maximum second timestamp among a plurality of second timestamps for the plurality of remote apparatuses respectively; and
calculating the service interruption time based on the minimum first timestamp, the maximum second timestamp, and a time for detecting occurrence of a defect,
wherein for example granularity of the service interruption time is per Ethernet service.

13. The apparatus of any of claims 8 to 12, wherein the apparatus is a local apparatus, and the at least one defect comprises at least one synthetic defect for a plurality of remote apparatuses,
wherein for example the service interruption time is determined as:

the second timestamp associated with the at least one synthetic defect minus the first timestamp associated with the at least one synthetic defect, plus a time for detecting occurrence of a defect ,
wherein for example granularity of the service interruption time is per user network interface (UNI) associated with the Ethernet service, or per Ethernet service,
wherein for example at least one of the following:

the at least one defect comprises at least one of a loss of continuity defect (dLOC) or a remote defect indication defect (dRDI);
the CCM set is sent to the apparatus with a constant size and a constant period; or
accuracy of the first timestamp, the second timestamp and the third timestamp is higher than or equal to a predetermined accuracy,
wherein for example the Ethernet service comprises:

an Ethernet line service (E-line);
an Ethernet local area network service (E-LAN);
an Ethernet tree service (E-tree); or
an Ethernet access service (E-access),
wherein for example the apparatus comprises a network element (NE).

14. A method, comprising:

detecting (210), at a first apparatus (120), at least one loss of continuity defect, dLOC, associated with a service interruption of an Ethernet service based on a continuity check message, CCM, set;
determining (220) a first timestamp indicating a raise time of a first dLOC among the at least one dLOC;
determining (230) a second timestamp indicating a clear time of a last dLOC among the at least one dLOC; and
sending (240) the first timestamp and the second timestamp to a second apparatus (130).

15. A method, comprising:

receiving (244), at a second apparatus (130), at least one first timestamp and at least one second timestamp from at least one first apparatus (120), wherein a first timestamp of a first apparatus among the at least one first apparatus (120) indicates a raise time of a first loss of continuity defect, dLOC, at the first apparatus, among at least one dLOC associated with a service interruption of an Ethernet service, and a second timestamp of the first apparatus indicates a clear time of a last dLOC among the at least one dLOC; and

determining (250) a service interruption time of the Ethernet service based on the at least one first timestamp and the at least one second timestamp.

16. A method, comprising:

detecting, based on a continuity check message (CCM) set, at least one defect associated with a service interruption of an Ethernet service;

determining a first timestamp indicating a raise time of a first defect among the at least one defect;

determining a second timestamp indicating a clear time of a last defect among the at least one defect; and

determining a service interruption time of the Ethernet service based on the first timestamp and the second timestamp.

17. A first apparatus (120), comprising:

means for detecting (210), based on a continuity check message, CCM, set, at least one loss of continuity defect, dLOC, associated with a service interruption of an Ethernet service;

means for determining (220) a first timestamp indicating a raise time of a first dLOC among the at least one dLOC;

means for determining (230) a second timestamp indicating a clear time of a last dLOC among the at least one dLOC; and

means for sending (240) the first timestamp and the second timestamp to a second apparatus (130).

18. A second apparatus (130), comprising:

means for receiving (244) at least one first timestamp and at least one second timestamp from at least one first apparatus, wherein a first timestamp of a first apparatus among the at least one first apparatus indicates a raise time of a first loss of continuity defect, dLOC, at the first apparatus, among at least one dLOC associated with a service interruption of an Ethernet service, and a second timestamp of the first apparatus indicates a clear time of a last dLOC among the at least one dLOC; and

means for determining (250) a service interruption time of the Ethernet service based on the at least one first timestamp and the at least one second timestamp.

19. An apparatus, comprising:

means for detecting, based on a continuity check message (CCM) set, at least one defect associated with a service interruption of an Ethernet service;

means for determining a first timestamp indicating a raise time of a first defect among the at least one defect;

means for determining a second timestamp indicating a clear time of a last defect among the at least one defect; and

means for determining a service interruption time of the Ethernet service based on the first timestamp and the second timestamp.

20. A computer readable medium comprising program instructions stored thereon, the program instructions are used for performing at least one of the methods of any of the claims 14, or 15 or 16.

FIG. 1A

FIG. 1B

EP 4 730 733 A1

FIG. 1C

- Receive port of tester — 110-4
- Transmit port of tester — 110-3
- ETH switch — 122
- ETH switch — 121
- Client port — 122-1
- Client port — 121-1
- Network port (working) — 122-2
- Network port (protection) — 122-3
- Network port (working) — 121-2
- Network port (protection) — 121-3
- Ethernet — 105
- 140
- 150
- Working / protection path
- End-to-end service flow path

Transmit port
of tester

Traffic pattern:
Uniform frames
Frame size is constant
Frame period is constant (e.g., 100 µs)

| 24 | 23 | 22 | 21 | 20 | 19 | 18 | 17 | 16 | 15 | 14 | 13 | 12 | 11 | 10 | 9 | 8 | 7 | 6 | 5 | 4 | 3 | 2 | 1 |

Traffic hit time
(Frames are lost during Ethernet protection switch)

| 24 | 23 | 22 | 21 | 20 | 19 | | 8 | 7 | 6 | 5 | 4 | 3 | 2 | 1 |

Traffic hit time = Number of lost frames × Frame period

Receive port
of tester

FIG. 1D

EP 4 730 733 A1

Network failure

Service degradation

Start of protection switching operations

Last control signal or command received

Protection switching operations completed

Protected traffic fully restored

$T_1$   $T_2$   $T_3$   $T_4$   $T_5$     Time

$T_c$            $T_t$

$T_r$

FIG. 1E

200

120 — First Apparatus

130 — Second Apparatus

**210**
Detect, based on a CCM set, at least one dLOC associated with a service interruption of the Ethernet service

**220**
Determine a first timestamp indicative of an occurrence time of a first dLOC among the at least one dLOC

**230**
Determine a second timestamp indicative of a clearing time of a last dLOC among the at least one dLOC

240

242:First timestamp and second timestamp

244

**250**
Determine a service interruption time of the Ethernet service based on the at least one first timestamp and the at least one second timestamp

FIG. 2

Option 1

Up MEP

**E-Line**

UNI-1    UNI-2

NE-1    NE-2

MEP-1    MEP-2

dLOC [1,2]    dLOC [2,1]

**E-LAN**

UNI-1

NE-1    MEP-1    dLOC [1,2]

dLOC [2,1]    MEP-2    MEP-3    dLOC [3,2]
dLOC[2, 3]

NE-2    NE-3

UNI-2    UNI-3

**E-Tree**

Root UNI-1

NE-1    MEP-1    dLOC [1,2]
dLOC [1,3]

Leaf UNI-2    Leaf UNI-3

NE-2    NE-3

MEP-2    MEP-3

dLOC [2,1]    dLOC [3,1]
(dLOC [2,3] restrained)    (dLOC [3,2] restrained)

FIG. 3A

Option 2

**E-Line**

UNI-1
NE-1
UNI-2
NE-2

MEP-1
MEP-2

dLOC[1]=dLOC[1,2]
dLOC[2] = dLOC[2,1]

**E-LAN**

UNI-1
NE-1    MEP-1    dLOC[1]=
dLOC[1,2]

UNI-2
NE-2
UNI-3
NE-3

MEP-2
MEP-3

dLOC[2]=
dLOC [2,1] or dLOC[2, 3]

dLOC [3]=
dLOC[3,2]

Up MEP

**E-Tree**

Root UNI-1
NE-1    MEP-1

dLOC[1] =
dLOC[1,2] or dLOC[1,3]

Leaf UNI-2
NE-2
Leaf UNI-3
NE-3

MEP-2
MEP-3

dLOC[2] =
dLOC [2,1]

dLOC[3] =
dLOC [3,1]

dLOC [2,3] restrained
dLOC [3,2] restrained

FIG. 3B

EP 4 730 733 A1

FIG. 4

500

510

Detect, based on a continuity check message (CCM) set, at least one defect associated with a service interruption of an Ethernet service

520

Determine a first timestamp indicating a raise time of a first defect among the at least one defect

530

Determine a second timestamp indicating a clear time of a last defect among the at least one defect

540

Determine a service interruption time of the Ethernet service based on the first timestamp and the second timestamp

FIG. 5

## Option 3

### E-Line

UNI-1  UNI-2

NE-A  NE-B

MEP-1  MEP-2

dLOC[1,2]  dRDI[2,1]

### E-LAN

UNI-1

NE-A  MEP-1 dRDI[1,2]
dRDI[1,3]

UNI-2  UNI-3

NE-B  NE-C

MEP-2  MEP-3

dLOC[2,1]  dLOC[3,1]
dRDI[2, 3]  dRDI[3,2]

### E-Tree

▲ Up MEP

Root UNI-1

NE-A  MEP-1  dRDI[1,2]
dRDI[1,3]

Leaf UNI-2  Leaf UNI-3

NE-B  NE-C

MEP-2  MEP-3

dLOC [2,1]  dLOC[3,1]
dRDI [2,3] restrained  dRDI[3,2] restrained

## FIG. 6A

EP 4 730 733 A1

Option 4

**E-Line**

UNI-1 — NE-A — (cloud) — NE-B — UNI-2

MEP-1 ▲ ————————————— ▲ MEP-2

dLOC[1]=dLOC[1,2]     dLOC[2] = dLOC[2,1]

▲ Up MEP

**E-LAN**

UNI-1
NE-A MEP-1

dRDI[1]=
dRDI[1,2] or dRDI[1,3]

UNI-2 — NE-B — MEP-2
UNI-3 — NE-C — MEP-3

dLOC[2]=
dLOC[2,1]

dRDI[2]=
dRDI[2, 3]

dLOC[3]=
dLOC[3,1]

dRDI[3]=
dRDI[3,2]

**E-Tree**

Root UNI-1
MEP-1
NE-A

dLOC[1] =
dLOC[1,2] or dLOC[1,3]

Leaf UNI-2
NE-B
MEP-2

Leaf UNI-3
NE-C
MEP-3

dLOC[2] =
dLOC[2,1]

dRDI[2,3] restrained

dLOC[3] =
dLOC[3,1]

dRDI[3,2] restrained

FIG. 6B

FIG. 7

EP 4 730 733 A1

800

810

Detect, based on a continuity check message (CCM) set, at least one loss of continuity defect (dLOC) associated with a service interruption of an Ethernet service

820

Determine a first timestamp indicating a raise time of a first dLOC among the at least one dLOC

830

Determine a second timestamp indicating a clear time of a last dLOC among the at least one dLOC

840

Send the first timestamp and the second timestamp to a second apparatus

FIG.8

900

910

Receive at least one first timestamp and at least one second timestamp from at least one first apparatus, wherein a first timestamp of a first apparatus among the at least one first apparatus indicates a raise time of a first loss of continuity defect (dLOC), at the first apparatus, among at least one dLOC associated with a service interruption of an Ethernet service, and a second timestamp of the first apparatus indicates a clear time of a last dLOC among the at least one dLOC

920

Determine a service interruption time of the Ethernet service based on the at least one first timestamp and the at least one second timestamp

FIG.9

FIG. 10

FIG. 11

Europäisches Patentamt

European Patent Office

Office européen des brevets

# EUROPEAN SEARCH REPORT

**Application Number**

EP 25 20 8682

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 322 098 A2 (ALCATEL CANADA INC [CA]) 25 June 2003 (2003-06-25) | 1,2,4, 8-10, 14-20 | INV. H04L41/0663 H04L43/0811 H04L43/106 H04L12/28 |
| Y | * paragraph [0008] - paragraph [0013] * * paragraph [0032] - paragraph [0033] * * paragraph [0039] * * paragraph [0046] * * claim 1 * | 3,5-7, 11-13 | ADD. H04L43/0852 H04L41/045 |
| X | CN 102 215 141 A (HUAWEI TECH CO LTD) 12 October 2011 (2011-10-12) * the whole document * | 1,4,8, 14-20 | |
| Y | US 2023/300050 A1 (MA XIAO HUA [CN] ET AL) 21 September 2023 (2023-09-21) * paragraph [0002] - paragraph [0006] * * paragraph [0031] - paragraph [0033] * * paragraph [0037] - paragraph [0066] * * paragraph [0116] - paragraph [0117] * * paragraph [0147] * | 3,5-7, 11-13 | |
| A | Dicko Hammadoun: "White Paper 038", , 28 February 2014 (2014-02-28), pages 1-6, XP093065349, Retrieved from the Internet: URL:http://www.equicom.hu/wp-content/uploads/EXFO_wpaper038_Understanding-Ethernet-OAM_en.pdf [retrieved on 2023-07-19] * the whole document * | 1-20 | TECHNICAL FIELDS SEARCHED (IPC) H04L |

The present search report has been drawn up for all claims

| Place of search | Date of completion of the search | Examiner |
|---|---|---|
| Munich | 16 February 2026 | Ramenzoni, Stefano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 8682

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2026

| Patent document cited in search report | | Publication date | Patent family member(s) | | Publication date |
|---|---|---|---|---|---|
| EP 1322098 | A2 | 25-06-2003 | CN | 1426253 A | 25-06-2003 |
| | | | DE | 60207967 T2 | 17-08-2006 |
| | | | EP | 1322098 A2 | 25-06-2003 |
| | | | US | 2003110408 A1 | 12-06-2003 |
| CN 102215141 | A | 12-10-2011 | NONE | | |
| US 2023300050 | A1 | 21-09-2023 | CN | 116800632 A | 22-09-2023 |
| | | | EP | 4246913 A2 | 20-09-2023 |
| | | | US | 2023300050 A1 | 21-09-2023 |

EPO FORM P0459

For more details about this annex : see Official Journal of the European Patent Office, No. 12/82